# EUROPEAN PATENT SPECIFICATION

(11) **EP 1 138 910 B1**
(45) Date of publication and mention of the grant of the patent: **23.03.2005**
(21) Application number: 00106977.2
(22) Date of filing: 01.04.2000
(51) Int. Cl.: F02D 41/20

(54) **Control of the polarization of piezoelectric elements before each first injection to achieve optimized starting conditions**
Steuerung der Polarization der piezoelektrischen Elemente vor jeder ersten Einspritzung zur Erreichung von optimalen Startbedingungen
Commande de la polarisation des éléments piézoélectriques avant chaque première injection pour arriver aux conditions de démarrage optimale

(43) Date of publication of application: 04.10.2001
(73) Proprietor: Robert Bosch GmbH, 70469 Stuttgart (DE)
(72) Inventor: Rueger, Johannes-Joerg, 71665 Vaihingen/Enz (DE); Schulz, Udo, 71665 Vaihingen/Enz (DE)

(56) References cited:
- EP-A- 0 324 450
- GB-A- 2 219 145
- US-A- 4 705 003
- PATENT ABSTRACTS OF JAPAN vol. 012, no. 315 (M-735), 26 August 1988 (1988-08-26) & JP 63 088249 A (HITACHI LTD), 19 April 1988 (1988-04-19)
- PATENT ABSTRACTS OF JAPAN vol. 018, no. 641 (E-1639), 6 December 1994 (1994-12-06) & JP 06 245552 A (SUMITOMO METAL IND LTD), 2 September 1994 (1994-09-02)

## Description

The present invention relates to a method as defined in the preamble of claim 1, and an apparatus as defined in the preamble of claim 10, that is, a method and an apparatus for uniformly polarizing a piezoelectric element.

The present piezoelectric elements being considered in more detail are, in particular but not exclusively, piezoelectric elements used as actuators. Piezoelectric elements can be used for such purposes because, as is known, they possess the property of contracting or expanding as a function of a voltage applied thereto or occurring therein.

The practical implementation of actuators using piezoelectric elements proves to be advantageous in particular if the actuator in question must perform rapid and/or frequent movements.

EP 0324450 discloses a fuel injection control device for use in an engine, wherein a piezoelectric element is charged with electrons by using an LC resonant circuit. Said piezoelectric element is driven at least once before a regular injection of a corresponding fuel injector is carried out.

The use of piezoelectric elements as actuators proves to be advantageous, inter alia, in fuel injection nozzles for internal combustion engines. Reference is made, for example, to EP 0 371 469 B1 and to EP 0 379 182 B1 regarding the usability of piezoelectric elements in fuel injection nozzles.

In a particular embodiment of the present invention, a piezoelectric element is an actuator in fuel injection system and the invention discloses a method and apparatus for uniformly polarizing the piezoelectric element before a first fuel injection to optimize starting.

Piezoelectric elements are capacitive elements which, as already partially alluded to above, contract and expand in accordance with the particular charge state or the voltage occurring therein or applied thereto. In the example of a fuel injection nozzle, expansion and contraction of piezoelectric elements is used to control valves that manipulate the linear strokes of injection needles. The use of piezoelectric elements with double acting, double seat valves or double acting control valves to control respective injection needles in a fuel injection system is shown in German Patent Application Nos. DE 197 42 073 A1 and DE 197 29 844 A1, which are described below.

Fuel injection systems using piezoelectric elements, e.g., actuators, are characterized by the fact that, to a first approximation, piezoelectric elements can exhibit a proportional relationship between applied voltage and the linear expansion. In a fuel injection nozzle, for example, implemented as a double acting, double seat valve to control the linear stroke of a needle for fuel injection into a cylinder of an internal combustion engine, the amount of fuel injected into a corresponding cylinder is a function of the time the valve is open, and in the case of the use of a piezoelectric element, the activation voltage applied to the piezoelectric element. If the valve plug of the control valve is located in one of the two seats of the double acting control valve, the nozzle needle remains or becomes closed. If the valve plug is in an intermediate position between the seats, then the nozzle needle remains or becomes open. The goal is to achieve a desired fuel injection volume with high accuracy, especially at small injection volumes, for example during pre-injection.

In the example of a double acting control valve, the piezoelectric element is to be expanded or contracted by the effect of an activation voltage applied to the piezoelectric element, so that a corresponding controlled valve plug is positioned midway between the two positions of the double acting control valve to position the corresponding injection nozzle needle for maximum fuel flow during a set time period. It has proven to be difficult to determine and apply an activation voltage suitable for all injection elements and the whole lifetime of the injection system with sufficient precision such that, for example, a corresponding valve plug is accurately positioned for maximum fuel flow. In addition, it is extremely important that the actuator travel be set with the highest accuracy possible.

As stated, the amount of expansion or contraction of piezoelectric elements is influenced by operating characteristics of each particular piezoelectric element, and can vary from sample-to-sample and/or with the ages of the piezoelectric elements. The result is that actuators behave differently when charged to the same voltage, and their operation can vary over time. In terms of fuel injection and injection profile, this generally infers a deviation from optimum system operation.

The activation voltage applied to a piezoelectric element at any particular time can be compensated to be appropriate relative to the operating characteristics of the particular piezoelectric element at the time of application of the voltage. In this manner, a desired injection volume can be achieved with sufficient accuracy even if the injection volume is small or the injection profile complex.

The polarization state of a piezoelectric element is one factor that affects the travel of the piezoelectric element in an electrical field.

Microscopic polarization of a piezoelectric element may arise below the Curie temperature when the charge centroids of the crystal lattice structures of piezoelectric elements no longer reside in the center of the crystal lattice. This creates electrical dipoles resulting in internal polarization (that is, spontaneous polarization).

Similar to Weiss domains in ferromagnetic materials, areas or domains are formed in piezoelectric elements in which the crystal lattice has the same alignment. Macroscopically, the effects of the domains having different orientations cancel. Piezoelectric elements have paraelectrical behavior in the unpolarized state. By applying an electrical field, the direction of the polarization of the dipole areas can be influenced. Macroscopic polarization can be achieved by reorienting the spontaneously polarized domains. These domains rotate or tip in the direction of the applied field. This process is a part of the manufacturing process of piezoelectric elements. After the polarizing electric field has been removed, the piezoelectric elements remain in a state of remnant polarization (P_{R}).

The capacitive response of piezoelectric elements cannot be described by a sole function of various parameters, for example, the applied voltage and temperature. The behavior of piezoelectric elements is highly dependent on their history. In this way, it is necessary to always place the piezoelectric element in a reproducible initial state so that comparable and reproducible measurements and drive operations can be performed.

If no external electric field is applied to the piezoelectric element for a lengthy period of time (hours, days, or weeks), the polarization of the piezoelectric element will change; that is, the remanent polarization will decrease. The reason for this is the instability of the domains that reorient themselves, for example, by impacts, shakes or temperature causing elastic or thermal energy effects not in the direction of the normal direction of action of the otherwise controlling electric field. The result is a changing maximum travel of the piezoelectric element during a first fuel injection action after a lengthy period of no applied electrical field (e.g., travel about 10% greater than the normal travel). This yields a different setting of the double-acting control valve used in common rail systems (i.e., systems in which fuel pressure is provided by one high pressure pump for all cylinders) or of the control valve used in unit injection systems (i.e., systems in which fuel pressure is provided individually for each cylinder) and thus a quantity of fuel injected different from that desired. Sub-optimal conditions during starting in connection with the torque, exhaust emissions, noise and the like can result under such circumstances.

It is therefore an object of the present invention to reestablish the required remanent polarization P_{R} of the piezoelectric element before a first fuel injection action. Advantages from realizing this object include optimal conditions in connection with exhaust emissions, noise and engine torque as well as ensuring an optimal start and a uniform polarization state of the piezoelectric element beginning with a first fuel injection action and continuing onward.

This object is achieved, according to the present invention, by way of the features claimed in the characterizing portion of claim 1 (method) and in the characterizing portion of claim 10 (apparatus).

These provide for:
- a method and apparatus for uniformly polarizing a piezoelectric element before a first fuel injection action.

One advantage of the present invention is that the method and apparatus disclosed compensate for the variation of maximum piezoelectric travel with temperature to achieve uniform polarization so that fuel injection actions occur within permissible fuel injection ranges, thereby ensuring correct functionality.

Advantageous developments of the present invention are evident from the dependent claims, the description below, and the figures.

The invention will be explained below in more detail with reference to exemplary embodiments, referring to the figures in which:
- Fig. 1a: shows a schematic representation of a fuel injection system using a piezoelectric element as an actuator;
- Fig. 1b: shows a graph depicting the relationship between activation voltage and injected fuel volume in a fixed time period for the example of a double acting control valve.
- Fig. 2: shows a schematic profile of an exemplary control valve stroke and a corresponding nozzle needle lift for the example of a double acting control valve;
- Fig. 3: shows a schematic of an exemplary embodiment of an arrangement in which the present invention may be implemented;
- Fig. 4a: shows a depiction to explain the conditions occurring during a first charging phase (charging switch 220 closed) in the circuit of Fig. 3;
- Fig. 4b: shows a depiction to explain the conditions occurring during a second charging phase (charging switch 220 open again) in the circuit of Fig. 3;
- Fig. 4c: shows a depiction to explain the conditions occurring during a first discharging phase (discharging switch 230 closed) in the circuit of Fig. 3;
- Fig. 4d: shows a depiction to explain the conditions occurring during a second discharging phase (discharging switch 230 open again) in the circuit of Fig. 3; and
- Fig. 5: shows a block diagram of components of the activation IC E which is also shown in Fig. 3.
- Fig. 6a: shows a block diagram of exemplary software modules implemented in the control unit D and the activation IC E which are also shown in Fig. 3, as well as the coupling between these modules, a fuel injection system and a corresponding internal combustion engine.
- Fig. 6b: shows the inner construction of the online optimization module, comprising an activation enabling module and the optimization module itself.
- Fig. 7a: shows a fuel injection system in accordance with embodiments of the present invention.
- Fig. 7b: shows the polarization versus electric field curve for a typical piezoelectric element.
- Fig. 7c: shows the displacement (travel) versus electric field curve corresponding to the polarization versus electric field curve shown in Fig. 7c.
- Fig. 8: shows the polarization versus electric field curve within a range of zero and a maximum electric field.
- Fig. 9: shows the displacement (travel) versus electric field curves for a piezoelectric element at different initial polarization states.
- Fig. 10: shows an exemplary software embodiment of the present invention.
- Fig. 11: shows a typical polarization voltage signal comprising a plurality of voltage signals.

### I. Charging the Piezoelectric Element and Optimizing its Travel by Application of Voltage Signals

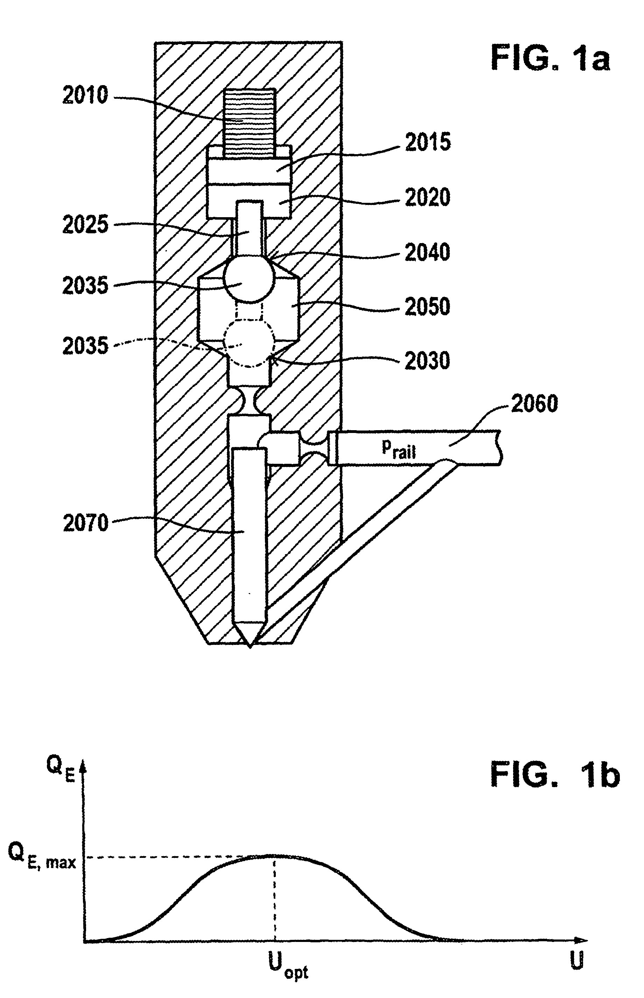

Fig. 1a is a schematic representation of a fuel injection system using a piezoelectric element 2010 as an actuator. Referring to Fig. 1a, the piezoelectric element 2010 is electrically energized to expand and contract in response to a given activation voltage. The piezoelectric element 2010 is coupled to a piston 2015. In the expanded state, the piezoelectric element 2010 causes the piston 2015 to protrude into a hydraulic adapter 2020 which contains a hydraulic fluid, for example fuel. As a result of the piezoelectric element's expansion, a double acting control valve 2025 is hydraulically pushed away from hydraulic adapter 2020 and the valve plug 2035 is extended away from a first closed position 2040. The combination of double acting control valve 2025 and hollow bore 2050 is often referred to as double acting, double seat valve for the reason that when piezoelectric element 2010 is in an unexcited state, the double acting control valve 2025 rests in its first closed position 2040. On the other hand, when the piezoelectric element 2010 is fully extended, it rests in its second closed position 2030. The later position of valve plug 2035 is schematically represented with ghost lines in Fig. 1a.

The fuel injection system comprises an injection needle 2070 allowing for injection of fuel from a pressurized fuel supply line 2060 into the cylinder (not shown). When the piezoelectric element 2010 is unexcited or when it is fully extended, the double acting control valve 2025 rests respectively in its first closed position 2040 or in its second closed position 2030. In either case, the hydraulic rail pressure maintains injection needle 2070 at a closed position. Thus, the fuel mixture does not enter into the cylinder (not shown). Conversely, when the piezoelectric element 2010 is excited such that double acting control valve 2025 is in the so-called mid-position with respect to the hollow bore 2050, then there is a pressure drop in the pressurized fuel supply line 2060. This pressure drop results in a pressure differential in the pressurized fuel supply line 2060 between the top and the bottom of the injection needle 2070 so that the injection needle 2070 is lifted allowing for fuel injection into the cylinder (not shown).

Fig. 1b shows a graph depicting the relationship between activation voltage and injected volume, e.g., of fuel, during a preselected fixed time period, for an exemplary fuel injection system using piezoelectric elements acting upon double acting control valves. The y-axis represents volume of fuel injected into a cylinder chamber during the preselected fixed period of time. The x-axis represents the activation voltage applied to or stored in the corresponding piezoelectric element, used to displace a valve plug of the double acting control valve.

At x=0, y=0, the activation voltage is zero, and the valve plug is seated in a first closed position to prevent the flow of fuel during the preselected fixed period of time. For values of the activation voltage greater than zero, up to the x-axis point indicated as Uₒₚₜ, the represented values of the activation voltage cause the displacement of the valve plug away from the first closed position and towards the second closed position, in a manner that results in a greater volume of injected fuel for the fixed time period, as the activation voltage approaches Uₒₚₜ, up to the value for volume indicted on the y-axis by Q_{e,max}. The point Q_{e,max}, corresponding to the greatest volume for the injected fuel during the fixed period of time, represents the value of the activation voltage for application to or charging of the piezoelectric element, that results in an optimal displacement of the valve plug between the first and second closed positions of the valve.

As shown on the graph of Fig. 1b, for values of the activation voltage greater than Uₒₚₜ, the volume of fuel injected during the fixed period of time decrease until it reaches zero. This represents displacement of the valve plug from the optimal point and toward the second closed position of the double acting seat valve until the valve plug is situated against the second closed position. Thus, the graph of Fig. 1b illustrates that a maximum volume of fuel injection occurs when the activation voltage causes the piezoelectric element to displace the valve plug to the optimal point.

The present invention provides that the value for Uₒₚₜ at any given time for a particular piezoelectric element is influenced by the operating characteristics of the particular piezoelectric element at that time. That is, the amount of displacement caused by the piezoelectric element for a certain activation voltage varies as a function of the operating characteristics of the particular piezoelectric element. Accordingly, in order to achieve a maximum volume of fuel injection, Q_{e,max}, during a given fixed period of time, the activation voltage applied to or occurring in the piezoelectric element should be set to a value relevant to current operating characteristics of the particular piezoelectric element, to achieve Uₒₚₜ.

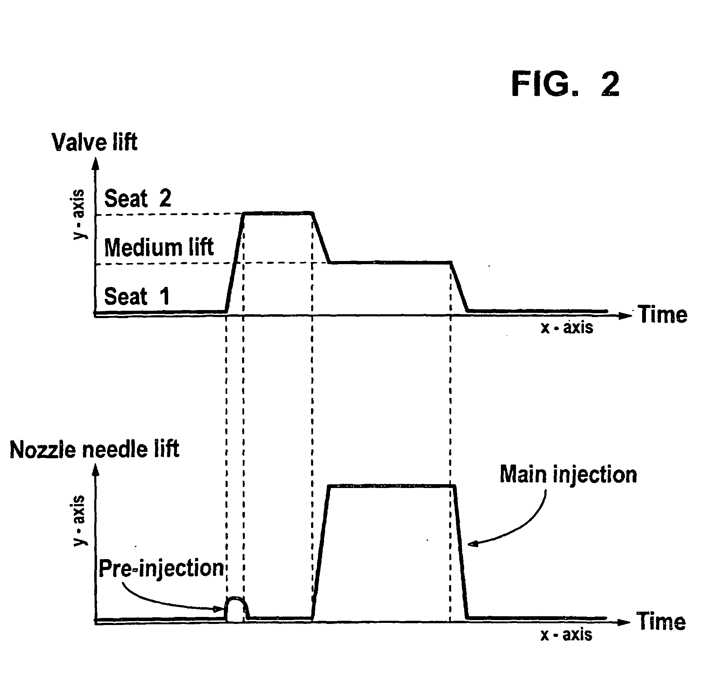

Fig. 2 shows a double graph representing a schematic profile of an exemplary control valve stroke, to illustrate the double acting seat valve operation discussed above. In the upper graph of Fig. 2, the x-axis represents time, and the y-axis represents displacement of the valve plug (valve lift). In the lower graph of Fig. 2, the x-axis once again represents time, while the y-axis represents a nozzle needle lift to provide fuel flow, resulting from the valve lift of the upper graph. The upper and lower graphs are aligned with one another to coincide in time, as represented by the respective x-axises.

During an injection cycle, the piezoelectric element is charged resulting in an expansion of the piezoelectric element, as will be described in greater detail, and causing the corresponding valve plug to move from the first closed position to the second closed position for a pre-injection stroke, as shown in the upper graph of Fig. 2. The lower graph of Fig. 2 shows a small injection of fuel that occurs as the valve plug moves between the two seats of the double acting control valve, opening and closing the valve as the plug moves between the seats. In general, the charging of the piezoelectric element can be done in two steps: the first one is to charge it to a certain voltage and cause the valve to open and the second one is to charge it further and cause the valve to close again at the second closed position. Between these steps, in general, there can be a certain time delay.

After a preselected period of time, a discharging operation is then performed, as will be explained in greater detail below, to reduce the charge within the piezoelectric element so that it contracts, as will also be described in greater detail, causing the valve plug to move away from the second closed position, and hold at a midway point between the two closed positions. As indicated in Fig. 1b, the activation voltage within the piezoelectric element is to reach a value that equals Uₒₚₜ to correspond to an optimal point of the valve lift, and thereby obtain a maximum fuel flow, Q_{e,max}, during the period of time allocated to a main injection. The upper and lower graphs of Fig. 2 show the holding of the valve lift at a midway point, resulting in a main fuel injection.

At the end of the period of time for the main injection, the piezoelectric element is discharged to an activation voltage of zero, resulting in further contraction of the piezoelectric element, to cause the valve plug to move away from the optimal position, towards the first closed position, closing the valve and stopping fuel flow, as shown in the upper and lower graphs of Fig. 2. At this time, the valve plug will once again be in a position to repeat another pre-injection, main injection cycle, as just described above, for example. Of course, any other injection cycle can be performed.

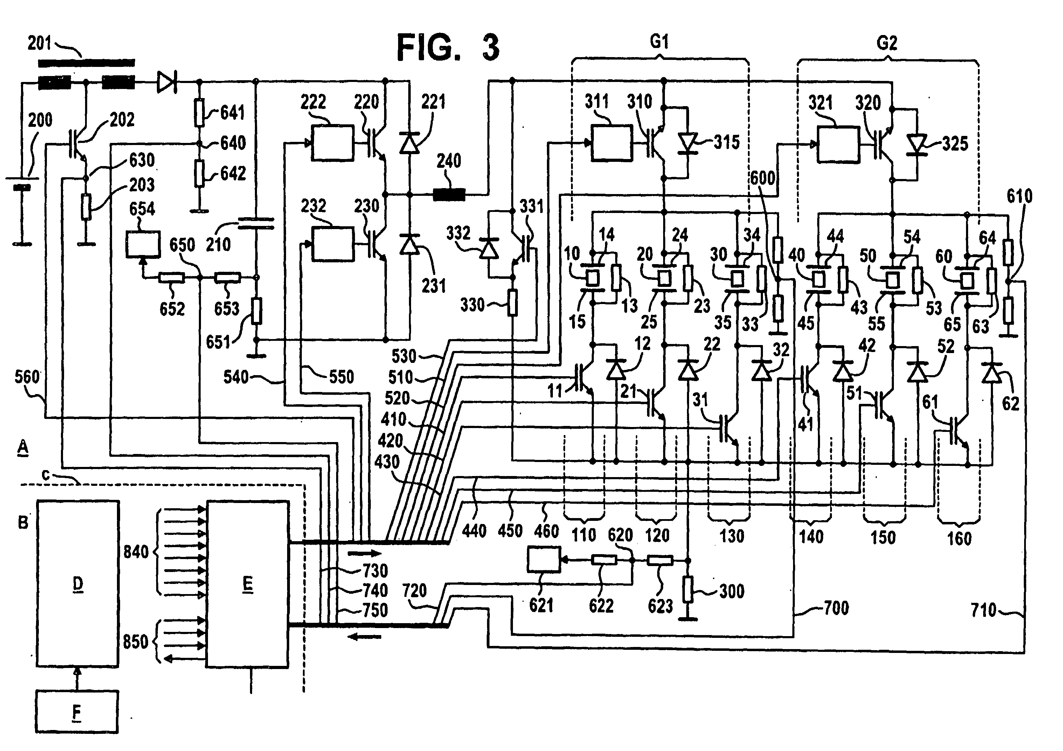

Fig. 3 provides a schematic of an exemplary embodiment of an arrangement in which the present invention may be implemented.

In Fig. 3 there is a detailed area A and a non-detailed area B, the separation of which is indicated by a dashed line c. The detailed area A comprises a circuit for charging and discharging piezoelectric elements 10, 20, 30, 40, 50 and 60. In the example being considered these piezoelectric elements 10, 20, 30, 40, 50 and 60 are actuators in fuel injection nozzles (in particular in so-called common rail injectors) of an internal combustion engine. Piezoelectric elements can be used for such purposes because, as is known, and as discussed above, they possess the property of contracting or expanding as a function of a voltage applied thereto or occurring therein. The reason to take six piezoelectric elements 10, 20, 30, 40, 50 and 60 in the embodiment described is to independently control six cylinders within a combustion engine; hence, any other number of piezoelectric elements might match any other purpose.

The non-detailed area B comprises a control unit D and a activation IC E by both of which the elements within the detailed area A are controlled, as well as a measuring system F for measuring system operating characteristics such as, for example, fuel pressure and rotational speed (rpm) of the internal combustion engine for input to and use by the control unit D, according to the present invention, as will be described in detail below. According to the present invention, the control unit D and activation IC E are programmed to control activation voltages for piezoelectric elements as a function of operating characteristics of the each particular piezoelectric element.

The following description firstly introduces the individual elements within the detailed area A. Then, the procedures of charging and discharging piezoelectric elements 10, 20, 30, 40, 50, 60 are described in general. Finally, the ways both procedures are controlled by means of control unit D and activation IC E, according to the present invention, are described in detail.

The circuit within the detailed area A comprises six piezoelectric elements 10, 20, 30, 40, 50 and 60.

The piezoelectric elements 10, 20, 30, 40, 50 and 60 are distributed into a first group G1 and a second group G2, each comprising three piezoelectric elements (i.e., piezoelectric elements 10, 20 and 30 in the first group G1 and 40, 50 and 60 in the second group G2, respectively). Groups G1 and G2 are constituents of circuit parts connected in parallel with one another. Group selector switches 310, 320 can be used to establish which of the groups G1, G2 of piezoelectric elements 10, 20 and 30 and 40, 50 and 60,respectively, will be discharged in each case by a common charging and discharging apparatus (however, the group selector switches 310, 320 are meaningless for charging procedures, as is explained in further detail below).

The group selector switches 310, 320 are arranged between a coil 240 and the respective groups G1 and G2 (the coil-side terminals thereof) and are implemented as transistors. Side drivers 311, 321 are implemented which transform control signals received from the activation IC E into voltages which are eligible for closing and opening the switches as required.

Diodes 315 and 325 (referred to as group selector diodes), respectively, are provided in parallel with the group selector switches 310, 320. If the group selector switches 310, 320 are implemented as MOSFETs or IGBTs, for example, these group selector diodes 315 and 325 can be constituted by the parasitic diodes themselves. The diodes 315, 325 bypass the group selector switches 310, 320 during charging procedures. Hence, the functionality of the group selector switches 310, 320 is reduced to select a group G1, G2 of piezoelectric elements 10, 20 and 30, and 40, 50 and 60,respectively, for a discharging procedure only.

Within each group G1 and G2 the piezoelectric elements 10, 20 and 30, and 40, 50 and 60,respectively, are arranged as constituents of piezo branches 110, 120 and 130 (group G1) and 140, 150 and 160 (group G2) that are connected in parallel. Each piezo branch comprises a series circuit made up of a first parallel circuit comprising a piezoelectric element 10, 20, 30, 40, 50 or 60, and a respective, corresponding resistor 13, 23, 33, 43, 53 or 63 (referred to as branch resistors) and a second parallel circuit made up of a selector switch implemented as a transistor 11, 21, 31, 41, 51 or 61 (referred to as branch selector switches) and a respective, corresponding diode 12, 22, 32, 42, 52 or 62 (referred to as branch diodes).

The branch resistors 13, 23, 33, 43, 53 and 63 cause each corresponding piezoelectric element 10, 20, 30, 40, 50 and 60, respectively, during and after a charging procedure to continuously discharge themselves, since they connect both terminals of each capacitive piezoelectric element 10, 20, 30, 40, 50, and 60, respectively, one to another. However, the branch resistors 13, 23, 33, 43, 53 and 63, respectively, are sufficiently large to make this procedure slow compared to the controlled charging and discharging procedures as described below. Hence, it is still a reasonable assumption to consider the charge of any piezoelectric element 10, 20, 30, 40, 50 or 60 as unchanging within a relevant time after a charging procedure (the reason to nevertheless implement the branch resistors 13, 23, 33, 43, 53 and 63 is to avoid remaining charges on the piezoelectric elements 10, 20, 30, 40, 50 and 60 in case of a breakdown of the system or other exceptional situations). Hence, the branch resistors 13, 23, 33, 43, 53 and 63 may be neglected in the following description.

The branch selector switch/branch diode pairs in the individual piezo branches 110, 120, 130, 140, 150 and 160, i.e. selector switch 11 and diode 12 in piezo branch 110, selector switch 21 and diode 22 in piezo branch 120, and so on, can be implemented using electronic switches (i.e. transistors) with parasitic diodes, for example MOSFETs or IGBTs (as stated above for the group selector switch/diode pairs 310 and 315, and 320 and 325, respectively).

The branch selector switches 11, 21, 31, 41, 51 and 61 can be used to establish which of the piezoelectric elements 10, 20, 30, 40, 50 or 60 will be charged in each case by a common charging and discharging apparatus: in each case, the piezoelectric elements 10, 20, 30, 40, 50 or 60 that are charged are all those whose respective branch selector switches 11, 21, 31, 41, 51 or 61 are closed during the charging procedure which is described below. Usually, at any time only one of the branch selector switches is closed.

The branch diodes 12, 22, 32, 42, 52 and 62 serve for bypassing the branch selector switches 11, 21, 31, 41, 51 and 61, respectively, during discharging procedures. Hence, in the example considered for charging procedures any individual piezoelectric element can be selected, whereas for discharging procedures either the first group G1 or the second group G2 of piezoelectric elements 10, 20 and 30, and 40, 50 and 60, respectively, or both groups, have to be selected.

Returning to the piezoelectric elements 10, 20, 30, 40, 50 and 60 themselves, the respective branch selector piezo terminals 15, 25, 35, 45, 55 and 65 may be connected to ground either through the branch selector switches 11, 21, 31, 41, 51 and 61, respectively, or through the corresponding diodes 12, 22, 32, 42, 52 and 62, respectively, and in both cases additionally through resistor 300.

The purpose of resistor 300 is to measure the currents that flow during charging and discharging of the piezoelectric elements 10, 20, 30, 40, 50 and 60 between the branch selector piezo terminals 15, 25, 35, 45, 55 and 65, respectively, and the ground. A knowledge of these currents allows a controlled charging and discharging of the piezoelectric elements 10, 20, 30, 40, 50 and 60. In particular, by closing and opening charging switch 220 and discharging switch 230 in a manner dependent on the magnitude of the currents, it is possible to set the charging current and discharging current to predefined average values and/or to keep them from exceeding or falling below predefined maximum and/or minimum values as is explained in further detail below.

In the example considered, the measurement itself further requires a voltage source 621 which supplies a voltage of 5 V DC, for example, and a voltage divider implemented as two resistors 622 and 623. This is in order to prevent the activation IC E (by which the measurements are performed) from negative voltages which might otherwise occur on measuring point 620 and which cannot be handled be means of activation IC E: such negative voltages are changed into positive voltages by means of addition with a positive voltage setup which is supplied by said voltage source 621 and voltage divider resistors 622 and 623.

The other terminal of each piezoelectric element 10, 20, 30, 40, 50 and 60, i.e., the group selector piezoelectric terminal 14, 24, 34, 44, 54 and 64, respectively, may be connected to the plus pole of a voltage source via the group selector switch 310 or 320, or via the group selector diode 315 or 325, as well as via a coil 240 and a parallel circuit made up of a charging switch 220 and a charging diode 221, and alternatively or additionally connected to ground via the group selector switch 310 or 320, or via diode 315 or 325 as well as via the coil 240 and a parallel circuit made up of a discharging switch 230 or a discharging diode 231. Charging switch 220 and discharging switch 230 are implemented as transistors, for example, which are controlled via side drivers 222 and 232, respectively.

The voltage source comprises an element having capacitive properties which, in the example being considered, is the (buffer) capacitor 210. Capacitor 210 is charged by a battery 200 (for example a motor vehicle battery) and a DC voltage converter 201 downstream therefrom. DC voltage converter 201 converts the battery voltage (for example, 12 V) into substantially any other DC voltage (for example, 250 V), and charges capacitor 210 to that voltage. DC voltage converter 201 is controlled by means of transistor switch 202 and resistor 203 which is utilized for current measurements taken from a measuring point 630.

For cross check purposes, a further current measurement at a measuring point 650 is allowed by activation IC E as well as by resistors 651, 652 and 653 and a 5 V DC voltage, for example, source 654; moreover, a voltage measurement at a measuring point 640 is allowed by activation IC E as well as by voltage dividing resistors 641 and 642.

Finally, a resistor 330 (referred to as total discharging resistor), a stop switch implemented as a transistor 331 (referred to as stop switch), and a diode 332 (referred to as total discharging diode) serve to discharge the piezoelectric elements 10, 20, 30, 40, 50 and 60 (if they happen to be not discharged by the "normal" discharging operation as described further below). Stop switch 331 is preferably closed after "normal" discharging procedures (cycled discharging via discharge switch 230). It thereby connects piezoelectric elements 10, 20, 30, 40, 50 and 60 to ground through resistors 330 and 300, and thus removes any residual charges that might remain in piezoelectric elements 10, 20, 30, 40, 50 and 60. The total discharging diode 332 prevents negative voltages from occurring at the piezoelectric elements 10, 20, 30, 40, 50 and 60, which might in some circumstances be damaged thereby.

Charging and discharging of all the piezoelectric elements 10, 20, 30, 40, 50 and 60 or any particular one is accomplished by way of a single charging and discharging apparatus (common to all the groups and their piezoelectric elements). In the example being considered, the common charging and discharging apparatus comprises battery 200, DC voltage converter 201, capacitor 210, charging switch 220 and discharging switch 230, charging diode 221 and discharging diode 231 and coil 240.

The charging and discharging of each piezoelectric element works the same way and is explained in the following while referring to the first piezoelectric element 10 only.

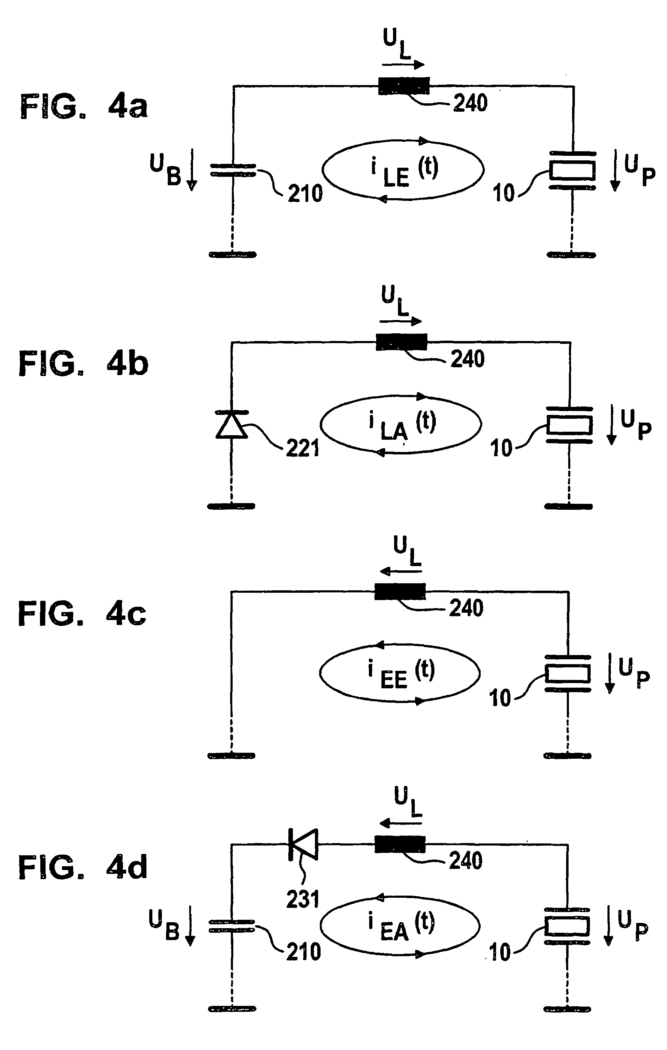

The conditions occurring during the charging and discharging procedures are explained with reference to Figs. 4A through 4D, of which Figs. 4A and 4B illustrate the charging of piezoelectric element 10, and Figs. 4C and 4D the discharging of piezoelectric element 10.

The selection of one or more particular piezoelectric elements 10, 20, 30, 40, 50 or 60 to be charged or discharged, the charging procedure as described in the following as well as the discharging procedure are driven by activation IC E and control unit D by means of opening or closing one or more of the above introduced switches 11, 21, 31, 41, 51, 61; 310, 320; 220, 230 and 331. The interactions between the elements within the detailed area A on the one hand and activation IC E and control unit D on the other hand are described in detail further below.

Concerning the charging procedure, firstly any particular piezoelectric element 10, 20, 30, 40, 50 or 60 which is to be charged has to be selected. In order to exclusively charge the first piezoelectric element 10, the branch selector switch 11 of the first branch 110 is closed, whereas all other branch selector switches 21, 31, 41, 51 and 61 remain opened. In order to exclusively charge any other piezoelectric element 20, 30, 40, 50, 60 or in order to charge several ones at the same time they would be selected by closing the corresponding branch selector switches 21, 31, 41, 51 and/or 61.

Then, the charging procedure itself may take place:

Generally, within the example considered, the charging procedure requires a positive potential difference between capacitor 210 and the group selector piezo terminal 14 of the first piezoelectric element 10. However, as long as charging switch 220 and discharging switch 230 are open no charging or discharging of piezoelectric element 10 occurs: In this state, the circuit shown in Fig. 3 is in a steady-state condition, i.e. piezoelectric element 10 retains its charge state in substantially unchanged fashion, and no currents flow.

In order to charge the first piezoelectric element 10, charging switch 220 is closed. Theoretically, the first piezoelectric element 10 could become charged just by doing so. However, this would produce large currents which might damage the elements involved. Therefore, the occurring currents are measured at measuring point 620 and switch 220 is opened again as soon as the detected currents exceed a certain limit. Hence, in order to achieve any desired charge on the first piezoelectric element 10, charging switch 220 is repeatedly closed and opened whereas discharging switch 230 remains open.

In more detail, when charging switch 220 is closed, the conditions shown in Fig. 4a occur, i.e., a closed circuit comprising a series circuit made up of piezoelectric element 10, capacitor 210, and coil 240 is formed, in which a current i_{LE}(t) flows as indicated by arrows in Fig. 4a. As a result of this current flow both positive charges are brought to the group selector piezo terminal 14 of the first piezoelectric element 10 and energy is stored in coil 240.

When charging switch 220 opens shortly (for example, a few *µ*s) after it has closed, the conditions shown in Fig. 4b occur: a closed circuit comprising a series circuit made up of piezoelectric element 10, charging diode 221, and coil 240 is formed, in which a current i_{LA}(t) flows as indicated by arrows in Fig. 4b. The result of this current flow is that energy stored in coil 240 flows into piezoelectric element 10. Corresponding to the energy delivery to the piezoelectric element 10, the voltage occurring in the latter, and its external dimensions, increase. Once energy transport has taken place from coil 240 to piezoelectric element 10, the steady-state condition of the circuit, as shown in Fig. 3 and already described, is once again attained.

At that time, or earlier, or later (depending on the desired time profile of the charging operation), charging switch 220 is once again closed and opened again, so that the processes described above are repeated. As a result of the re-closing and re-opening of charging switch 220, the energy stored in piezoelectric element 10 increases (the energy already stored in the piezoelectric element 10 and the newly delivered energy are added together), and the voltage occurring at the piezoelectric element 10, and its external dimensions, accordingly increase.

If the aforementioned closing and opening of charging switch 220 are repeated numerous times, the voltage occurring at the piezoelectric element 10, and the expansion of the piezoelectric element 10, rise in steps.

Once charging switch 220 has closed and opened a predefined number of times, and/or once piezoelectric element 10 has reached the desired charge state, charging of the piezoelectric element is terminated by leaving charging switch 220 open.

Concerning the discharging procedure, in the example considered, the piezoelectric elements 10, 20, 30, 40, 50 and 60 are discharged in groups (Gl and/or G2) as follows:

Firstly, the group selector switch(es) 310 and/or 320 of the group or groups G1 and/or G2 the piezoelectric elements of which are to be discharged are closed (the branch selector switches 11, 21, 31, 41, 51, 61 do not affect the selection of piezoelectric elements 10, 20, 30, 40, 50, 60 for the discharging procedure, since in this case they are bypassed by the branch diodes 12, 22, 32, 42, 52 and 62). Hence, in order to discharge piezoelectric element 10 as a part of the first group G1, the first group selector switch 310 is closed.

When discharging switch 230 is closed, the conditions shown in Fig. 4C occur: a closed circuit comprising a series circuit made up of piezoelectric element 10 and coil 240 is formed, in which a current i_{EE}(t) flows as indicated by arrows in Fig. 4C. The result of this current flow is that the energy (a portion thereof) stored in the piezoelectric element is transported into coil 240. Corresponding to the energy transfer from piezoelectric element 10 to coil 240, the voltage occurring at the piezoelectric element 10, and its external dimensions, decrease.

When discharging switch 230 opens shortly (for example, a few µs) after it has closed, the conditions shown in Fig. 4D occur: a closed circuit comprising a series circuit made up of piezoelectric element 10, capacitor 210, discharging diode 231, and coil 240 is formed, in which a current i_{EA}(t) flows as indicated by arrows in Fig. 4d. The result of this current flow is that energy stored in coil 240 is fed back into capacitor 210. Once energy transport has taken place from coil 240 to capacitor 210, the steady-state condition of the circuit, as shown in Fig. 3 and already described, is once again attained.

At that time, or earlier, or later (depending on the desired time profile of the discharging operation), discharging switch 230 is once again closed and opened again, so that the processes described above are repeated. As a result of the re-closing and re-opening of discharging switch 230, the energy stored in piezoelectric element 10 decreases further, and the voltage occurring at the piezoelectric element, and its external dimensions, also accordingly decrease.

If the aforementioned closing and opening of discharging switch 230 are repeated numerous times, the voltage occurring at the piezoelectric element 10, and the expansion of the piezoelectric element 10, decrease in steps.

Once discharging switch 230 has closed and opened a predefined number of times, and/or once the piezoelectric element has reached the desired discharge state, discharging of the piezoelectric element 10 is terminated by leaving discharging switch 230 open.

The interaction between activation IC E and control unit D on the one hand and the elements within the detailed area A on the other hand is performed by control signals sent from activation IC E to elements within the detailed area A via branch selector control lines 410, 420, 430, 440, 450, 460, group selector control lines 510, 520, stop switch control line 530, charging switch control line 540 and discharging switch control line 550 and control line 560. On the other hand, there are sensor signals obtained on measuring points 600, 610, 620, 630, 640, 650 within the detailed area A which are transmitted to activation IC E via sensor lines 700, 710, 720, 730, 740, 750.

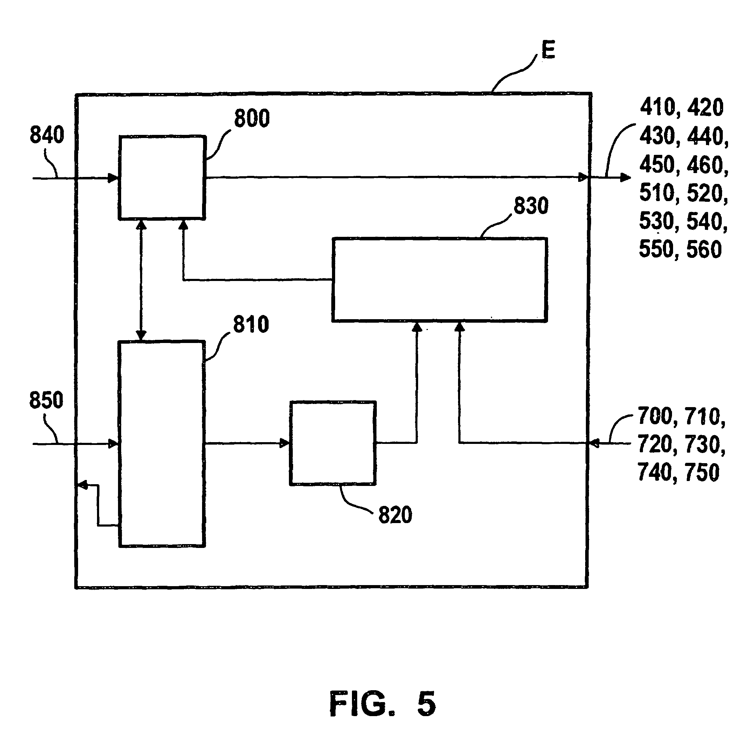

The control lines are used to apply or not to apply voltages to the transistor bases in order to select piezoelectric elements 10, 20, 30, 40, 50 or 60, to perform charging or discharging procedures of single or several piezoelectric elements 10, 20, 30, 40, 50, 60 by means of opening and closing the corresponding switches as described above. The sensor signals are particularly used to determine the resulting voltage of the piezoelectric elements 10, 20 and 30, and 40, 50 and 60 from measuring points 600 and 610, respectively, and the charging and discharging currents from measuring point 620. The control unit D and the activation IC E are used to combine both kinds of signals in order to perform an interaction of both as will be described in detail now while referring to Figs. 3 and 5.

As is indicated in Fig. 3, the control unit D and the activation integrated circuit E are connected to each other by means of a parallel bus 840 and additionally by means of a serial bus 850. The parallel bus 840 is particularly used for fast transmission of control signals from control unit D to the activation IC E, whereas the serial bus 850 is used for slower data transfer.

In Fig. 5 some components are indicated, which the activation IC E comprises: a logic circuit 800, RAM memory 810, digital to analog converter system 820 and comparator system 830. Furthermore, it is indicated that the fast parallel bus 840 (used for control signals) is connected to the logic circuit 800 of the activation IC E, whereas the slower serial bus 850 is connected to the RAM memory 810. The logic circuit 800 is connected to the RAM memory 810, to the comparator system 830 and to the signal lines 410, 420, 430, 440, 450 and 460; 510 and 520; 530; 540, 550 and 560. The RAM memory 810 is connected to the logic circuit 800 as well as to the digital to analog converter system 820. The digital to analog converter system 820 is further connected to the comparator system 830. The comparator system 830 is further connected to the sensor lines 700 and 710; 720; 730, 740 and 750 and -as already mentioned- to the logic circuit 800.

The above listed components may be used in a charging procedure for example as follows:

By means of the control unit D a particular piezoelectric element 10, 20, 30, 40, 50 or 60 is determined which is to be charged to a certain target voltage. Hence, firstly the value of the target voltage (expressed by a digital number) is transmitted to the RAM memory 810 via the slower serial bus 850. The target voltage can be, for example, the value for Uₒₚₜ used in a main injection, as described above with respect to Fig. 1. Later or simultaneously, a code corresponding to the particular piezoelectric element 10, 20, 30, 40, 50 or 60 which is to be selected and the address of the desired voltage within the RAM memory 810 is transmitted to the logic circuit 800 via the parallel bus 840. Later on, a strobe signal is sent to the logic circuit 800 via the parallel bus 840 which gives the start signal for the charging procedure.

First, the start signal causes the logic circuit 800 to pick up the digital value of the target voltage from the RAM memory 810 and to put it on the digital to analog converter system 820 whereby at one analog exit of the converters 820 the desired voltage occurs. Moreover, said analog exit (not shown) is connected to the comparator system 830. In addition hereto, the logic circuit 800 selects either measuring point 600 (for any of the piezoelectric elements 10, 20 or 30 of the first group G1) or measuring point 610 (for any of the piezoelectric elements 40, 50 or 60 of the second group G2) to the comparator system 830. Resulting thereof, the target voltage and the present voltage at the selected piezoelectric element 10, 20, 30, 40, 50 or 60 are compared by the comparator system 830. The results of the comparison, i.e., the differences between the target voltage and the present voltage, are transmitted to the logic circuit 800. Thereby, the logic circuit 800 can stop the procedure as soon as the target voltage and the present voltage are equal to one another.

Second, the logic circuit 800 applies a control signal to the branch selector switch 11, 21, 31, 41, 51 and/or 61 which corresponds to any selected piezoelectric element 10, 20, 30, 40, 50 and/or 60 so that the switch becomes closed (all branch selector switches 11, 21, 31, 41, 51 and/or 61 are considered to be in an open state before the onset of the charging procedure within the example described). Then, the logic circuit 800 applies a control signal to the charging switch 220 so that the switch becomes closed. Furthermore, the logic circuit 800 starts (or continues) measuring any currents occurring on measuring point 620. Hereto, the measured currents are compared to any predefined maximum value by the comparator system 830. As soon as the predefined maximum value is achieved by the detected currents, the logic circuit 800 causes the charging switch 220 to open again.

Again, the remaining currents at measuring point 620 are detected and compared to any predefined minimum value. As soon as said predefined minimum value is achieved, the logic circuit 800 causes the charging switch 220 to close again and the procedure starts again.

The closing and opening of the charging switch 220 is repeated as long as the detected voltage at measuring point 600 or 610 is below the target voltage. As soon as the target voltage is achieved, the logic circuit stops the continuation of the procedure.

The discharging procedure takes place in a corresponding way: Now the selection of the piezoelectric element 10, 20, 30, 40, 50 or 60 is obtained by means of the group selector switches 310 or 320, the discharging switch 230 instead of the charging switch 220 is opened and closed and a predefined minimum target voltage is to be achieved.

The timing of the charging and discharging operations and the holding of voltage levels in the piezoelectric elements 10, 20, 30, 40, 50 and/or 60, as for example, the time of a main injection, can be determined and accomplished according to the parameters of a valve stroke, as shown, for example, in Fig. 2.

It is to be understood that the above given description of the way charging or discharging procedures take place are exemplary only. Hence, any other procedure which utilizes the above described circuits or other circuits might match any desired purpose and any corresponding procedure may be used in place of the above described example.

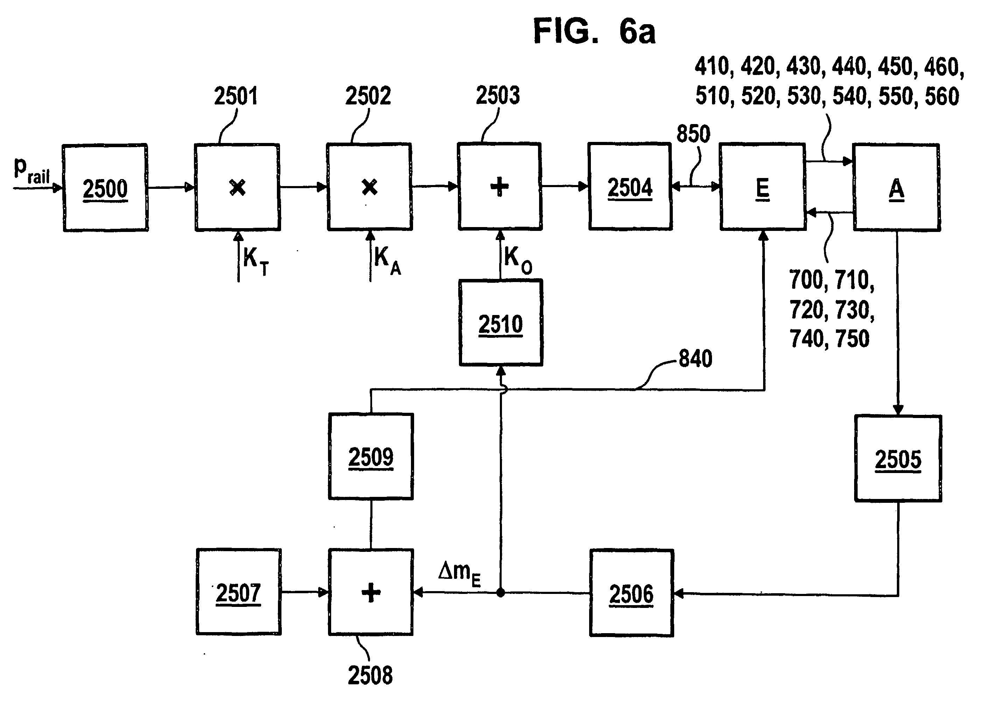

Fig. 6a shows a configuration for controlling a combustion engine 2505. This configuration comprises a basic voltage calculation unit 2500 which calculates a basic voltage to be applied to the piezoelectric elements 10, 20, 30, 40, 50, and 60, of the circuit included in the detailed area A of Fig. 6a; the detailed area A is also shown in Fig. 3. The basic voltage calculation unit 2500 calculates a basic voltage dependent on the pressure pᵣₐᵢₗ in the pressurized fuel supply line of the fuel injection system. In a preferred embodiment, the basic voltage is corrected via a first correction block 2501 using a temperature correction value K_{T}. The output from the first correction block 2501 is a corrected basic voltage. This corrected basic voltage is preferably corrected by a second or subsequent correction block 2502 using an aging correction value K_{A}. The first and second correction blocks 2501 and 2502 are preferably multipliers, i.e., the basic voltage is multiplied by the temperature correction value K_{T} and the output enters the second or subsequent correction block 2502 and is multiplied by the aging correction value K_{A}. The aging correction value K_{A} is calculated via a correction value calculation unit 2512. The correction block 2502 and the correction value calculation unit 2512 are part of a compensation unit 2511. The output of the second or subsequent correction block 2502 is preferably further corrected via a third or subsequent correction block 2503 using an online correction value Kₒ. The third or subsequent correction block 2503 is preferably implemented as an adder, i.e., the online correction value Kₒ is preferably added to the output of the second or subsequent correction block 2502. The output of the third or subsequent correction block 2503 is preferably fed through a voltage and voltage gradient controller 2504.

The basic voltage calculation unit 2500 and the correction blocks 2501, 2502, and 2503, as well as the voltage and voltage gradient controller 2504 are software modules implemented in control unit D in Fig. 3.

Further, in Fig. 6a, the voltage and voltage gradient controller 2504 is connected to the activation IC E shown in Fig. 3 via the serial bus 850. The activation IC E is connected to the circuit within the detailed area A via the signal lines 410, 420, 430, 440, 450, 460, 510, 520, 530, 540, 550, 560, 700, 710, 720, 730, 740, and 750. The fuel injection into the combustion engine 2505 is controlled via the piezoelectric elements 10, 20, 30, 40, 50, and 60, of the circuit within the detailed area A shown in Fig. 3. The rotational speed of the combustion engine 2505 is measured and fed into a fuel correction unit 2506. The fuel correction unit 2506 comprises a frequency analyzer which evaluates the frequency of the rotational speed. The fuel correction unit 2506 calculates a fuel correction value Δm_{E} upon this frequency analysis for each individual cylinder to the combustion engine 2505.

The configuration shown in Fig. 6a also comprises a fuel volume calculation unit 2507 calculating a desired fuel volume m_{E}. The desired fuel volume is added to the fuel volume correction value Δm_{E} via an adder 2508. The sum of the desired fuel volume m_{E} and the fuel volume correction value Δm_{E} is fed into a fuel metering unit 2509. The fuel metering unit calculates the time a voltage has to be applied to the piezoelectric elements 10, 20, 30, 40, 50 and 60, to inject fuel into the combustion engine 2505. The fuel correction unit 2506, the adder 2508, the fuel volume calculation unit 2507, and the fuel metering unit 2509 are implemented in the control unit D. Time signals to signaling when a voltage has to be applied to the piezoelectric elements 10, 20 ,30, 40, 50 and 60, to inject fuel into the combustion engine 2505 are transferred from the fuel metering unit 2509 to the activation IC E via the parallel bus 840.

The online correction value Kₒ is calculated by an online optimization unit 2510. The online optimization unit 2510 calculates the online correction value Kₒ based upon the fuel correction value Δm_{E} calculated by the fuel correction unit 2506.

In one embodiment, a fuel volume correction software module can be coupled to an internal combustion engine to sense a rotational speed (rpm) of the engine, and includes an output, also coupled to the ADD module. The module may use the rpm value to calculate a correction value Δm_{E1} for each cylinder of the internal combustion engine (i=cylinder number). The correction value Δm_{E1} is output by the module to the ADD module, where it is summed with the volume value m_{E}. Δm_{E1} corresponds to the fuel quantity deviation in cylinder i with respect to the mean fuel quantity of the other cylinders.

The sum of m_{E} plus Δm_{E1} is output by the ADD module for input to a metering unit, which also can be implemented as a software module in the control unit D. The metering unit can use a corrected volume value m_{E} plus Δm_{E1} for a specific cylinder, to determine time periods for pre-injections, main injections and post injections for that cylinder. The time period determinations of the metering unit are used to control the piezoelectric elements 10, 20, 30, 40, 50 and/or 60 by the IC E according to the previous descriptions regarding Figs. 3 and 5 (represented in Fig. 6a by the control lines 410, 420 and so on, coupling the metering unit to a block labeled A that corresponds to the detailed portion A of Fig. 3). A fuel volume calculation system implementing the fuel volume calculation software module, fuel volume correction software module, and metering unit, is readily available from Robert Bosch GMBH, Stuttgart, Federal Republic of Germany.

With respect to Fig. 1b, when piezoelectric elements are used as actuators in the fuel injection system, the volume of injected fuel can be a function of both the time the valve is opened, and the activation voltage applied to the piezoelectric element during the time period. An objective in operating the fuel injection system is to achieve an activation voltage value of Uₒₚₜ shown in Fig. 1b for the period of main injection. Similarly, the voltage gradient has to be optimized. Voltage gradients can have a relationship to fuel volume similar to the relationship between voltage and fuel volume shown in the graph of Fig. 1b. The values stored in, for example, RAM memory, for example, include the voltages that are used in charging and/or discharging procedures, as well as parameters influencing the voltage gradient.

The Uₒₚₜ values can change as a function of operating characteristics of the fuel injection system, such as, for example, fuel pressure, as fully described in co-pending application (attorney docket number 10744/11, entitled "Method and Apparatus for Charging a Piezoelectric Element", and attorney docket no. 10744/10, entitled "Online optimization of injection systems having piezoelectric elements", both applications filed on the same date as this application) and, especially with the particular fuel injection system, for example, the particular injector and piezoelectric element, and the age of the particular fuel injection system.

In one embodiment, the online optimization unit 2510 is based upon the recognition that the Δm_{E1} value for each cylinder can be influenced by operating characteristics of the particular piezoelectric element corresponding to the cylinder or changes over time of the operating characteristics for that actuator. The online optimization unit 2510 can select an incremental change in the voltage U applied to the corresponding actuator as an optimization step, and inputs the selection to the metering unit. The online optimization unit 2510 then monitors the value of Δm_{E1} after U is changed.

This procedure may be continued until the optimal voltage Uₒₚₜ is reached. This can be concluded from the fact that changes in both directions, that is, in further increases or decreases in the voltage, can lead to an increasing value for Δm_{E1}. Then, the maximum voltage within the fixed period of time is injected in accordance with Fig. 1b. This procedure is repeated for any cylinder to achieve the individual optimal voltages Uₒₚₜ, i.

If the value of Δm_{E1} decreases due to the change, then the action resulted in a greater volume of fuel injection, and the direction of the action was correct. The online optimization unit 2510 will then select an additional incremental change in the voltage U, and so on, if the value of Δm_{E1} continues to decrease. This procedure continues until the value of Δm_{E1} is minimized. If the value of Δm_{E1} increases after an incremental change, then the change direction was incorrect, and the optimization step is discarded. The online optimization unit 2510 can then begin incremental changes in the opposite direction, for example, a subtraction value to be summed with the current value of U.

In this manner, the optimization unit 2510 adjusts the value for Uₒₚₜ for each particular piezoelectric element 10, 20, 30, 40, 50 and/or 60, to accommodate differences in the operating characteristics between the piezoelectric elements 10, 20, 30, 40, 50 and/or 60, changes in the operating characteristics for any particular piezoelectric element with age, as well as differences in the behaviors of the hydraulic injection elements.

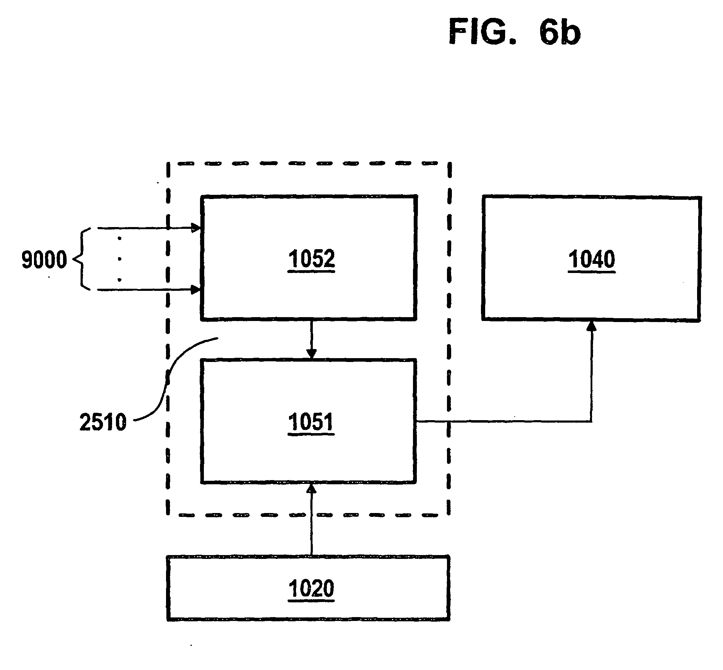

In one possible embodiment, the activation of the optimization is controlled by an activation enabling unit 1052 according to Fig. 6b. This unit 1052 enables or disables the optimization depending on some environmental data 9000, for example, the engine speed r.p.m., the rail pressure, the temperature and so on. Note that the environmental data 9000 is fed into the activation enabling unit 1052. From the activation enabling unit 1052, the output travels to the online optimization port 1051. Likewise, the output from the volume observation 1020, for example, can be fed into the online optimization port 1051. The output from the online optimization port 1051 travels to the metering unit 1040, for example. Referring to Fig. 6b, the online optimization unit 2510 consists of the activation control unit 1052 and the online optimization port 1051.

Usually the optimization takes some time and requires some specific environmental data, so it is enabled, for example, only once a driving cycle. Since the objective is to optimize the applied voltages due to sample-to-sample differences and aging effects, this should be sufficient.

In general, the optimization can be performed in predefined intervals as well.

Thus, optimization makes certain that the aging and operating characteristics of each particular piezoelectric element is compensated for in a determination of an activation voltage level.

### II. Initial Polarization of the Piezoelectric Element

The present invention may be applied to a fuel injection system as described above, particularly in Fig. 1a. The system can involve a double acting control valve with a valve plug or sealing element capable of moving between a first closed position and a second closed position of double acting control valve. When valve plug or sealing element is pressed against either of the first closed position or the second closed position, double acting control valve is closed. On the other hand, when the valve plug or sealing element does not make contact with either of the first closed position or the second closed position, double acting control valve is open. When double acting control valve is open, fuel can enter a connected combustion chamber (not shown) for subsequent combustion.

Rail pressure indicates that fuel at a certain rail pressure will normally enter double acting control valve. However, the rail pressure, and hence the amount of fuel within double acting control valve, can be reduced by opening a pressure control valve (not shown).

Piezoelectric element, which is attached to the valve plug or sealing element, is capable of expanding or contracting upon application of a charge or voltage to piezoelectric element, in the manner set forth above. The expansion and contraction of piezoelectric element is responsible for the motion of valve plug or sealing element between the first closed position and second closed position of double-acting control valve.

Below the Curie temperature, the charge centroids of the crystal lattice structures of piezoelectric elements no longer reside in the center of the crystal lattice. This creates electrical dipoles resulting in internal polarization (that is, spontaneous polarization).

Similar to Weiss domains in ferromagnetic materials, areas or domains are formed in piezoelectric elements in which the crystal lattice has the same alignment. Macroscopically, the effects of the domains having different orientations cancel. Piezoelectric elements have paraelectrical behavior in the unpolarized state. By applying an electrical field, the direction of the polarization of the dipole areas can be influenced. Macroscopic polarization can be achieved by reorienting the spontaneously polarized domains. These domains rotate or tip in the direction of the applied field. This process is a part of the manufacturing process of piezoelectric elements. After the polarizing electric field has been removed, the piezoelectric elements remain in a state of remanent polarization P_{R}.

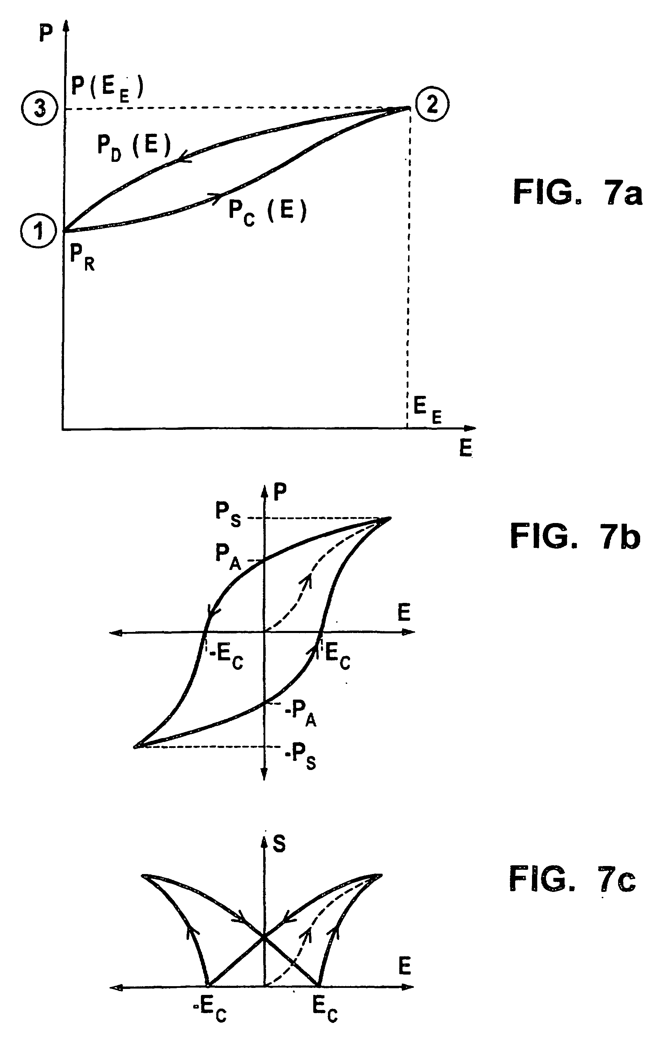

Fig. 7a shows the polarization of the piezoelectric element as a function of the applied electrical field when the magnitude of the applied electric field varies between zero and a maximum field Eₑ. The curve P_{c}(E) shows the polarization of the piezoelectric element as the applied electrical field is increased from zero to Eₑ. The curve P_{d}(E) shows the polarization of the piezoelectric element as the applied electrical field is decreased from Eₑ to zero. The polarization at zero applied electrical field is the remnant polarization P_{R}.

Fig. 7b shows the polarization P of a piezoelectric element as a function of the applied electrical field E. The dashed curve in Fig. 7b is followed only once by the piezoelectric element upon initial application of an electrical field. After this, the piezoelectric element is polarized and the P(E) curve follows a hysteresis curve as shown in Fig. 7b. Fig. 7c shows the relative expansion of the piezoelectric element as a function of the field strength corresponding Fig. 7b. After initial polarization of the piezoelectric element, subsequent applied external voltages do not re-polarize the piezoelectric element because the piezoelectric element is already polarized and does not lose its polarization upon discharging the piezoelectric element so long as the engine is idling.

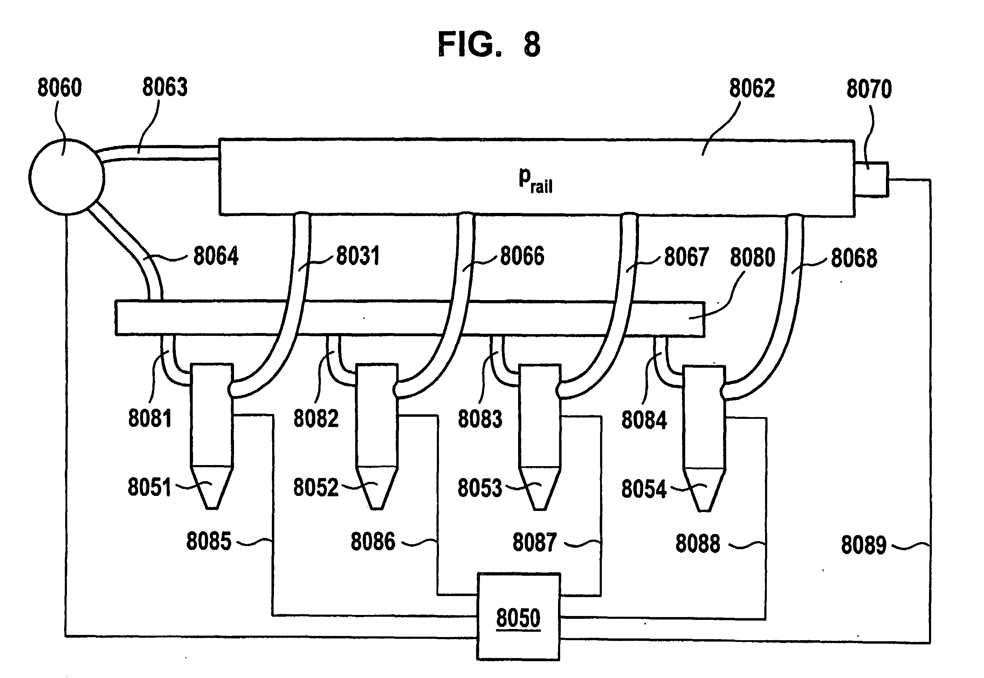

Fig. 8 shows a fuel injection system with four injectors 8051, 8052, 8053, 8054 connected via a common rail 8062 containing fuel having a rail pressure pᵣₐᵢₗ. This rail pressure pᵣₐᵢₗ can be, for example, up to 500 bar. To maintain a high pressure in the common rail 8062, the common rail 8062 is connected to a high pressure pump 8060 via a supply line 8063. The high pressure pump 8060 pumps fuel into the common rail 8062. The high pressure pump 8060 is ( further connected via a connector 8064) to a low pressure reservoir 8080 containing fuel at a pressure which is lower than pᵣₐᵢₗ. The injectors 8051, 8052, 8053, 8054 are connected to the common rail 8062 via fuel supply lines 8031, 8066, 8067 and 8068 respectively. With their so-called low pressure side, the injectors 8051, 8052, 8053, 8054 are connected to the low pressure reservoir 8080 via low pressure lines 8081, 8082, 8083, 8084 respectively.

The control unit 8050 is connected to the injectors 8051, 8052, 8053, 8054 via cables 8085, 8086, 8087, 8088 for applzing a voltage to the piezoelectric elements of the injectors 8051, 8052, 8053, 8054. The control unit 8050 is further connected to a pressure sensor 8070 via a cable 8089. The pressure sensor 8070 measures the pressure pᵣₐᵢₗ in the common rail 8062. Arrangements are also possible, wherein pressure sensors to measure the fuel pressure are located at the fuel supply lines 8031, 8066, 8067, 8068 or even within the injectors 8051, 8052, 8053, 8054. Where one pressure sensor 8070 is used to measure the pressure pᵣₐᵢₗ in the common rail 8062, is a preferred embodiment.

The pressurized fuel supply line referred to in the claims include not only the fuel supply lines 8031, 8066, 8067, 8068 but also the common rail 8062, the connector 8063 or even fuel supply lines within the injectors 8051, 8052, 8053, 8054. The control unit 8050 controls, in a preferred embodiment, the high pressure pump 8060. In a preferred embodiment, the control unit 8050, acts as a controller controlling the high pressure pump 8060 based upon measured values of the rail pressure pᵣₐᵢₗ and the common rail 8062 obtained by the pressure sensor 8070. Power supply lines for supplying the high pressure pump 8060 with electric power are not shown in Fig. 8.

The capacitive response of piezoelectric elements, e.g., actuators, cannot be described by a sole function of various parameters, for example, the applied voltage and temperature. The behavior of piezoelectric elements is highly dependent on their history. In this way, it is necessary to always place the piezoelectric element in a reproducible initial state so that comparable and reproducible measurements and drive operations can be performed.

If no external electric field is applied to the piezoelectric element for a lengthy period of time (hours, days, or weeks), the polarization of the piezoelectric will change; that is, the remnant polarization will decrease. The reason for this is the instability of the domains that reorient themselves, for example, by impacts, shakes or temperature causing elastic or thermal energy effects not in the direction of the normal direction of action of the otherwise controlling electric field. The result is a changing maximum travel of the piezoelectric element during a first fuel injection action after a lengthy period of no applied electrical field (e.g., travel about 10% greater than the normal travel). This yields a different setting of the double acting control valve used in common rail systems or of the control valve used in unit injection systems and thus a quantity of fuel injected different from that desired. Sub-optimal conditions during starting in connection with the torque, exhaust emissions, noise and the like can result under such circumstances.

It is therefore an object of the present invention to reestablish the required remanent polarization of the piezoelectric element before a first fuel injection action. Advantages from realizing this object include optimal conditions in connection with exhaust emissions, noise and engine torque as well as ensuring an optimal start and a uniform polarization state of the piezoelectric element beginning with a first fuel injection action and continuing onward.

An object of the invention can be realized by applying a voltage to the piezoelectric element that results in a polarizing electrical field. For example, a voltage can be approximately the same as the drive voltage required for placing the valve plug or sealing element in the first closed position of a double acting control valve or for placing a unit injection system in a closed state can be used.

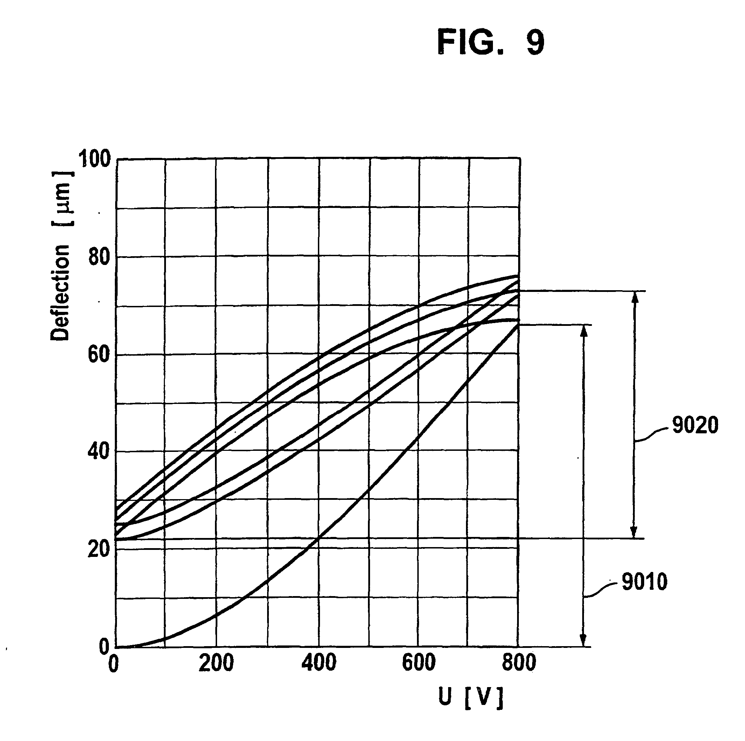

Generally, the maximum travel of the piezoelectric element is greater for a polarization lower than the remanent polarization than the maximum travel of the piezoelectric element at the remanent polarization. Fig. 9 shows the deflection of the piezoelectric element as a function of voltage applied for different polarizations of the piezoelectric element. Fig. 9 shows that the maximum deflection of the piezoelectric element at a polarization lower than the remnant polarization, as illustrated by deflection 9010, is greater than the maximum deflection of the piezoelectric element at the remnant polarization, as given by deflection 9020. Further, the maximum travel of the piezoelectric can also be affected by temperature such that at a temperature less than a predetermined threshold temperature, the sealing element of the double acting control valve can be adversely affected.

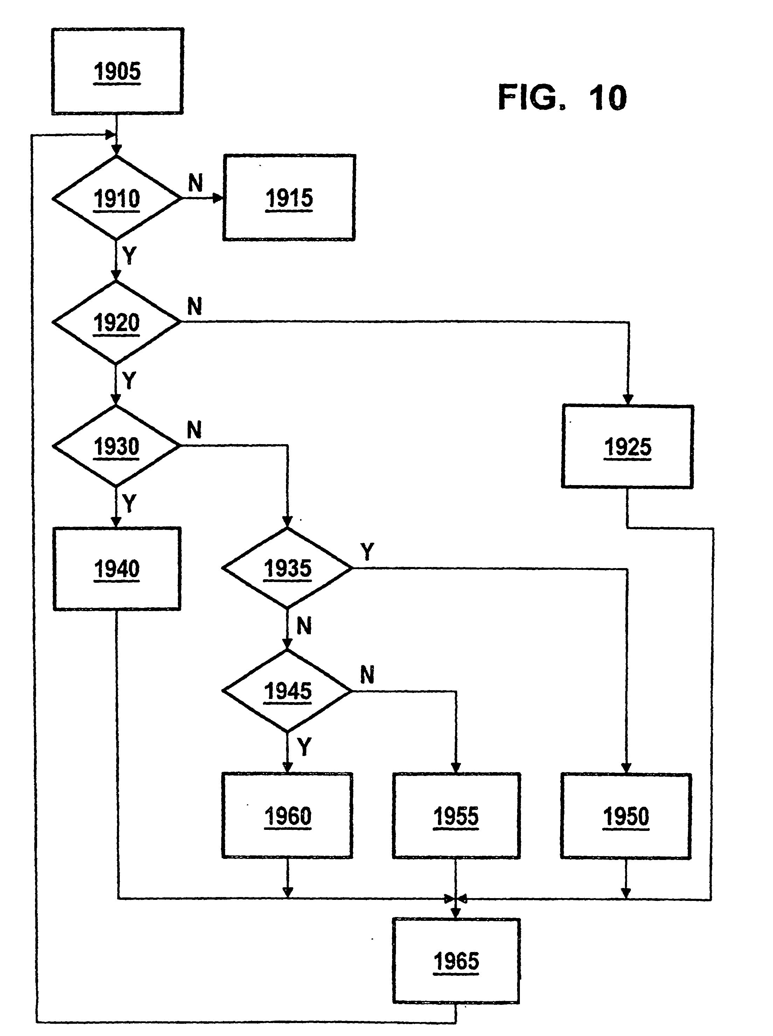

Fig. 10 illustrates an embodiment of the present invention that includes a process for uniformly polarizing the piezoelectric element during starting. Fig. 10 comprises an exemplary flowchart that represents the logic that can be executed electronically or in a software module for uniformly polarizing the piezoelectric element during starting. This embodiment is meant for example and is not the only possible logic that can be executed for the present invention disclosed and claimed.

Namely, at step 1905, the counter x that counts the number of voltage signals applied for polarizing the piezoelectric element is initialized to zero.

At step 1910, the value of counter x is compared to the variable y that stores the total number of voltage signals that are to be applied to the piezoelectric element for uniformly polarizing the piezoelectric element. The value of variable y can be determined in a software module and passed to a routine containing the logic illustrated in Fig. 10.

If the value of counter x is greater than the value of variable y, then all voltage signals comprising the polarization voltage signal have been applied and execution is terminated.

If the value of counter x is less than or equal to the value of variable y, then at step 1920 a determination is made of whether the piezoelectric element or actuator temperature exceeds a threshold temperature. The threshold temperature is the temperature above which the sealing element of the double acting control valve reliably reaches the first closed position. The threshold temperature can be determined and passed to the routine containing the logic illustrated in Fig. 10.

Above the threshold temperature, the sealing element of the double acting control valve reliably reaches the first closed position and thus a fuel injection action will not take place during application of a voltage signal to the piezoelectric element for polarization purposes. The application of a voltage signal characterized by a predetermined starting time, duration and amplitude can result in optimal (fast) polarization during control-unit initialization even before synchronization of the crankshaft and camshaft, thereby enabling subsequent fuel injection actions within permissible fuel injection ranges.

Accordingly, if the piezoelectric element or actuator temperature is greater than or equal to the threshold temperature, then a voltage signal having a starting time given by PABₓ and a duration given by PADₓ can be applied to the piezoelectric element at step 1925. Here, the subscript "x" indicates that the start time and the duration of a voltage signal may depend on the number of the voltage signals; for example, the first voltage signal may have a different start time and a different duration than the second voltage signal. The amplitude PLLₓ of a voltage signal may also depend on the number of the voltage signal, as shown in Fig. 10. The values of PABₓ, PADₓ and PLLₓ may be determined, e.g., in a software module, and passed to the routine containing the logic illustrated in Fig. 10.

Below the threshold temperature, the double acting control valve may not reliably reach the first closed position. For this reason, additional measures must be undertaken to ensure that the polarization process does not result in a non-optimal fuel injection action. An example of such a measure is to open a pressure control valve to reduce the rail pressure before application of a voltage signal to the piezoelectric element. This is to try to ensure that no fuel injection action occurs during the polarization process. As long as the measured rail pressure remains below a threshold that can be set in , e.g., a software module, the piezoelectric actuator can be driven with optimal polarization parameters.

Accordingly, if the piezoelectric element or actuator temperature is less than the threshold temperature, then at step 1930 a determination is made of whether the rail pressure is less than a threshold pressure. If the rail pressure is less than the threshold pressure, then, at step 1940, a voltage signal having a starting time given by PABₓ and a duration given by PADₓ can be applied to the piezoelectric element. Additionally, the applied voltage signal may have an amplitude given by the value of PLLₓ. The threshold pressure can be determined in, e.g., a software module, and passed to the routine containing the logic illustrated in Fig. 10.

If, however, the rail pressure cannot be reduced below the pressure threshold because of an error condition or because of other system conditions, other measures must be undertaken to prevent incorrect fuel injection operation due to excessive fuel injection drive duration during polarization. In this case, the duration of the voltage signal (the polarization drive duration) can be limited to be less than or equal to the duration that would result in actual fuel injection operation (the fuel injection drive duration). Consequently, fuel injection operation during application of the polarization voltage signal may occur; however, this fuel injection action will be correct except for the fault caused by less than optimal polarization.

A prerequisite for this polarizing fuel injection action, similar to the prerequisite for any other correct fuel injection action, is that the crankshaft and camshaft be synchronized.

If the rail pressure is greater than or equal to the threshold pressure, then a determination is made at step 1935 of whether PADₓ is less than the drive duration. If PADₓ is less than the drive duration, then, at step 1950, a voltage signal having a starting time given by PABₓ and a duration given by PADₓ can be applied to the piezoelectric element. Additionally, the applied voltage signal may have an amplitude given by the value of PLLₓ.

If at step 1935 it is determined that the drive duration is greater than or equal to PADx, then, at step 1945, a determination is made of whether the camshaft is synchronized with the crankshaft. If the crankshaft is synchronized with the camshaft, then, at step 1960, a voltage signal having a starting time given by the fuel injection drive start time (EAB), and a duration given by the smaller of PADₓ and the fuel injection drive duration (AD) can be applied to the piezoelectric element. This ensures that in case an uncontrolled injection occurs, the duration is limited.

If no synchronization between the camshaft and the crankshaft exists at step 1945, then no drive action occurs at step 1955.

At step 1965, the counter x that counts the number of voltage signals applied for polarizing the piezoelectric element is incremented by one, and control returns to step 1910.

Thus, in this manner, the piezoelectric element can be uniformly polarized while ensuring that no improper fuel injection action occurs.

These features as shown in Fig. 10 and as described above can be applied independently, i.e., is an independent feature or invention. The invented features are: a method for modeling uniformly polarizing the piezoelectric element during starting, preferably for a fuel injection system employing at least one piezoelectric element or actuator, characterized in that:
in a first step (1905), a counter x is initialized to a counter x value of zero, the counter x being capable of counting a number of voltage signals applied for polarizing the piezoelectric element;
in a second step (1910), the counter x value is compared to a variable y, the variable y being the total number of voltage signals that are to be applied to the piezoelectric element stored,
   a) if the counter x value is greater than the variable y then the counter indicates that the number of voltage signals applied for polarizing the piezoelectric element is the total number expected,
   b) if the counter x value is less than the variable y then a determination (1920) is made whether a current temperature of the piezoelectric element exceeds a threshold temperature, the threshold temperature preferably being predetermined,
      i) if the current temperature of the piezoelectric element is greater than (1925) the threshold temperature, then a voltage signal, having a start time determined by PABx and a duration determined by PADx, is applied to the piezoelectric element, where x indicates the start time, and where PADx and/or PABx may be predetermined, is applied to the piezoelectric element,
      ii) if the current temperature of the piezoelectric element is less than (1930) the threshold temperature, then a determination is made whether a rail pressure exceeds a threshold pressure, the threshold pressure preferably being predetermined,
         a) if the rail pressure is less than (1940) the threshold pressure, then a voltage signal, having a start time determined by the PABx and a duration determined by the PADx and preferably an amplitude value determined by the PLLx, where PABx and PADx and PLLx are preferably predetermined values, is applied to the piezoelectric element,
         b) if the rail pressure is equal to or greater than (1935) the threshold pressure, then a determination is made whether the PADx value exceeds a current drive duration of the piezoelectric element,
            i) if the PADx value is less than (1950) the current drive duration of the piezoelectric element, then a voltage signal having a starting time determined by PABx and a duration determined by PADx, is applied to the piezoelectric element,
            ii) if the PADx value is equal to or greater than (1945) the current drive duration of the piezoelectric element, then a determination is made whether a camshaft of the system is synchronized with a crankshaft of the system,
               a) if the camshaft of the system is synchronized (1960) with the crankshaft of the system, then a voltage signal, having a start time determined by a fuel injection drive start time (EAB) and a duration determined by the smaller of PADx and the fuel injection drive duration (AD), is applied to the piezoelectric element,
               b) if the camshaft of the system is not synchronized (1955) with the crankshaft of the system, then no drive action is effected,
                  ii) if the PADx value is greater than (1945) the current drive duration of the piezoelectric element, then a determination,
and when the voltage signal is applied to the piezoelectric element then the counter x is incremented by one and returns control to the first step (1905).

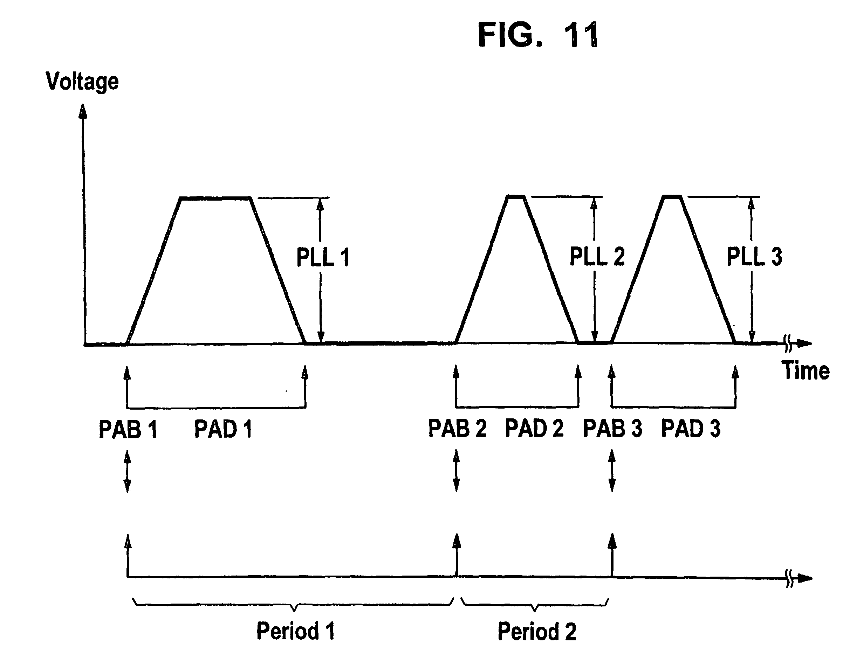

Fig. 11 shows an example of a polarization voltage signal plotted against time. The polarization voltage signal of Fig. 11 is comprised of three voltage signals. The first, second and third voltage signals have starting times of PAB1, PAB2 and PAB3, respectively; durations of PAD1, PAD2 and PAD3, respectively; and amplitudes of PLL1, PLL2 and PLL3, respectively. A period for the voltage signals can be defined from the difference in starting time between consecutive signals. For example, in Fig. 11, Period 1 is given by the difference in time between the first and second voltage signals and Period 2 is given by the difference in time between the second and third voltage signals. Where all periods of the voltage signals within a polarization voltage signal are uniform, the polarization voltage signal may also be characterized by the repetition rate or frequency, which can be calculated by taking the reciprocal of the uniform period.

## Claims

1. A method for charging a piezoelectric element (10, 20, 30, 40, 50, and/or 60), wherein said piezoelectric element (10, 20, 30, 40, 50, and/or 60) is initially polarized by application of a polarization voltage signal before a fuel injection action, **characterized in that** said initial polarization is performed depending on a temperature of the piezoelectric element (10, 20, 30, 40, 50, and/or 60)

2. Method according to claim 1, **characterized in that** said piezoelectric element (10, 20, 30, 40, 50, and/or 60) is part of an actuator for a valve (7000) of a fuel injection system, the valve connected to a combustion chamber, the actuator adapted to move to seal and unseal the valve.

3. The method as defined in any of the foregoing claims **characterized in that** the following steps are performed:
determining whether the temperature of the piezoelectric element (10, 20, 30, 40, 50, and/or 60) exceeds the critical temperature;
performing a first polarization process on the piezoelectric element (10, 20, 30, 40, 50, and/or 60) if the temperature of the piezoelectric element (10, 20, 30, 40, 50, and/or 60) exceeds the critical temperature, the first polarization process including application of a first polarization voltage signal to the piezoelectric element (10, 20, 30, 40, 50, and/or 60); and
performing a second polarization process on the piezoelectric element (10, 20, 30, 40, 50, and/or 60) if the temperature of the piezoelectric is below the critical temperature, the second polarization process including application of a second polarization voltage signal to the piezoelectric element (10, 20, 30, 40, 50, and/or 60).

4. The method as defined in any of the foregoing claims, **characterized in that** the polarization voltage and/or the first polarization voltage signal includes a predetermined number of voltage signals, each voltage signal of the predetermined number applied for a polarization drive duration, the predetermined number of voltage signals applied at a predetermined repetition rate.

5. The method as defined in claims 3 or 4, **characterized in that** the second polarization process includes ensuring that a rail pressure of the valve remains below a threshold pressure.

6. The method as defined in claims 3, 4 or 5 **characterized in that** the second polarization process includes opening at least one pressure control valve, the pressure control valve being connected to the valve.

7. The method as defined in claims 3, 4, 5 or 6 **characterized in that** the second polarization voltage signal includes a predetermined number of voltage signals, each voltage signal of the predetermined number applied for a polarization drive duration, the predetermined number of voltage signals applied at a predetermined repetition rate.

8. The method as defined in claims 3, 4, 5, 6 or 7 **characterized in that** a determination of whether a rail pressure of the valve exceeds a threshold pressure is made and the second polarization voltage signal includes a predetermined number of voltage signals, each voltage signal of the predetermined number applied for a polarization drive duration, the polarization drive duration being less than a fuel injection drive duration, the predetermined number of voltage signals applied at a predetermined repetition rate.

9. The method as defined in claims 3, 4, 5, 6, 7 or 8 **characterized in that** determinations of whether a rail pressure of the valve exceeds a threshold pressure and whether a camshaft is synchronized with a crankshaft are made and wherein the second polarization voltage signal includes a predetermined number of voltage signals, each voltage signal of the predetermined number applied for a polarization drive duration, the polarization drive duration being less than a fuel injection drive duration, the predetermined number of voltage signals applied at a predetermined repetition rate.

10. An apparatus for charging a piezoelectric element (10, 20, 30, 40, 50, and/or 60), **characterized in that** the apparatus comprises means for performing a process of initial polarization of the piezoelectric element that includes applying a polarization voltage signal to the piezoelectric element (10, 20, 30, 40, 50, and/or 60) depending on a temperature of said piezoelectric element (10, 20, 30, 40, 50, and/or 60).

11. An apparatus according to claim 10, **characterized in that** the apparatus consists of hardware and/or software to implement the method as claimed in any of the claims 1 to 9.

12. The apparatus as defined in claims 10 or 11 **characterized in that** the apparatus comprises:
means for determining whether the temperature of the piezoelectric element (10, 20, 30, 40, 50, and/or 60) exceeds a critical temperature;
means for performing a first polarization process on the piezoelectric element (10, 20, 30, 40, 50, and/or 60) if the temperature of the piezoelectric element (10, 20, 30, 40, 50, and/or 60) exceeds a critical temperature, the first polarization process including application of a first polarization voltage signal to the piezoelectric element (10, 20, 30, 40, 50, and/or 60); and
means for performing a second polarization process on the piezoelectric element (10, 20, 30, 40, 50, and/or 60) if the temperature of the piezoelectric element (10, 20, 30, 40, 50, and/or 60) is below the critical temperature, the second polarization process including application of a second polarization voltage signal to the piezoelectric element (10, 20, 30, 40, 50, and/or 60).

13. The apparatus as defined in claims 10, 11 or 12, **characterized in that** the piezoelectric element (10, 20, 30, 40, 50, and/or 60) is part of an actuator in a fuel injection system, the fuel injection system including a valve connected to a combustion chamber, the actuator adapted to move to seal and unseal the valve, the valve containing fuel at a rail pressure and being connected to at least one pressure control valve.

14. The apparatus as defined in claims 12 or 13 **characterized in that** the first polarization process differs from the second polarization process.

15. The apparatus as defined in claims 12, 13 or 14 **characterized in that** the first polarization voltage signal applied to the piezoelectric element (10, 20, 30, 40, 50, and/or 60) includes a predetermined number of voltage signals, each voltage signal of the predetermined number applied for a polarization drive duration, the predetermined number of voltage signals applied at a predetermined repetition rate.

16. The apparatus as defined in claims 12, 13, 14 or 15, **characterized in that** the second polarization process includes ensuring that the rail pressure remains below a threshold pressure.

17. The apparatus as defined in claims 12, 13, 14, 15 or 16 **characterized in that** the second polarization process includes opening the at least one pressure control valve.

18. The apparatus as defined in claims 12, 13, 14, 15, 16 or 17 **characterized in that** the second polarization voltage signal applied to the piezoelectric element (10, 20, 30, 40, 50, and/or 60) includes a predetermined number of voltage signals, each voltage signal of the predetermined number applied for a polarization drive duration, the predetermined number of voltage signals applied at a predetermined repetition rate.

19. The apparatus as defined in claims 12, 13, 14, 15, 16, 17 or 18 **characterized in that** the second polarization process includes determining whether the rail pressure exceeds a threshold pressure, and the second polarization voltage signal includes a predetermined number of voltage signals, each voltage signal of the predetermined number applied for a polarization drive duration, the polarization drive duration being less than a fuel injection drive duration, the predetermined number of voltage signals applied at a predetermined repetition rate.

20. The apparatus as defined in claim 12, 13, 14, 15, 16, 17, 18 or 19 **characterized in that** the second polarization process includes determining whether the rail pressure exceeds a threshold pressure and whether a camshaft is synchronized with a crankshaft, and the second polarization voltage signal includes a predetermined number of voltage signals, each voltage signal of the predetermined number applied for a polarization drive duration, the polarization drive duration being less than a fuel injection drive duration, the predetermined number of voltage signals applied at a predetermined repetition rate.

## Patentansprüche

1. Verfahren zum Laden eines piezoelektrischen Elements (10, 20, 30, 40, 50 und/öder 60) wobei das piezoelektrische Element (10, 20, 30, 40, 50 und/oder 60) anfänglich durch Anlegen eines Polarisationsspannungssignals vor einer Kraftstoffeinspritzaktion polarisiert wird, **dadurch gekennzeichnet, daß** die anfängliche Polarisation je nach einer Temperatur des piezoelektrischen Elements (10, 20, 30, 40, 50 und/oder 60) ausgeführt wird.

2. Verfahren nach Anspruch 1, **dadurch gekennzeichnet, daß** das piezoelektrische Element (10, 20, 30, 40, 50 und/oder 60) Teil eines Aktuators für ein Ventil (7000) eines Kraftstoffeinspritzsystems ist, wobei das Ventil mit einer Verbrennungskammer verbunden ist und der Aktuator dafür ausgelegt ist, sich zu bewegen und das Ventil zu schließen und zu öffnen.

3. Verfahren nach einem der vorhergehenden Ansprüche, **dadurch gekennzeichnet, daß** die folgenden Schritte ausgeführt werden:
Bestimmen, ob die Temperatur des piezoelektrischen Elements (10, 20, 30, 40, 50 und/oder 60) die kritische Temperatur übersteigt;
Ausführen eines ersten Polarisationsprozesses an dem piezoelektrischen Element (10, 20, 30, 40, 50 und/oder 60), wenn die Temperatur des piezoelektrischen Elements (10, 20, 30, 40, 50 und/oder 60) die kritische Temperatur übersteigt, wobei der erste Polarisationsprozeß das Anlegen eines ersten Polarisationsspannungssignals an das piezoelektrische Element (10, 20, 30, 40, 50 und/oder 60) beinhaltet, und
Ausführen eines zweiten Polarisationsprozesses an dem piezoelektrischen Element (10, 20, 30, 40, 50 und/oder 60), wenn die Temperatur des piezoelektrischen Elements unter der kritischen Temperatur liegt, wobei der zweite Polarisationsprozeß das Anlegen eines zweiten Polarisationsspannungssignals an das piezoelektrische Element (10, 20, 30, 40, 50 und/oder 60) beinhaltet.

4. Verfahren nach einem der vorhergehenden Ansprüche, **dadurch gekennzeichnet, daß** die Polarisationsspannung und/oder das erste Polarisationsspannungssignal eine vorbestimmte Anzahl von Spannungssignalen enthält, wobei jedes Spannungssignal der vorbestimmten Anzahl für eine Polarisationsansteuerdauer angelegt wird, wobei die vorbestimmte Anzahl von Spannungssignalen mit einer vorbestimmten Wiederholgeschwindigkeit angelegt wird.

5. Verfahren nach den Ansprüchen 3 oder 4, **dadurch gekennzeichnet, daß** der zweite Polarisationsprozeß beinhaltet, sicherzustellen, daß ein Raildruck des Ventils unter einem Schwellwertdruck bleibt.

6. Verfahren nach Anspruch 3, 4 oder 5, **dadurch gekennzeichnet, daß** der zweite Polarisationsprozeß das Öffnen mindestens eines Drucksteuerventils beinhaltet, wobei das Drucksteuerventil mit dem Ventil verbunden ist.

7. Verfahren nach den Ansprüchen 3, 4, 5 oder 6, **dadurch gekennzeichnet, daß** das zweite Polarisationsspannungssignal eine vorbestimmte Anzahl von Spannungssignalen enthält, wobei jedes Spannungssignal der vorbestimmten Anzahl für eine Polarisationsansteuerdauer angelegt wird, wobei die vorbestimmte Anzahl von Spannungssignalen mit einer vorbestimmten Wiederholgeschwindigkeit angelegt wird.

8. Verfahren nach den Ansprüchen 3, 4, 5, 6 oder 7, **dadurch gekennzeichnet, daß** eine Bestimmung, ob ein Raildruck des Ventils einen Schwellwertdruck übersteigt, vorgenommen wird und das zweite Polarisationsspannungssignal eine vorbestimmte Anzahl von Spannungssignalen enthält, wobei jedes Spannungssignal der vorbestimmten Anzahl für eine Polarisationsansteuerdauer angelegt wird, wobei die Polarisationsansteuerdauer kleiner ist als eine Kraftstoffeinspritzansteuerdauer, wobei die vorbestimmte Anzahl von Spannungssignalen mit einer vorbestimmten Wiederholgeschwindigkeit angelegt wird.

9. Verfahren nach den Ansprüchen 3, 4, 5, 6, 7 oder 8, **dadurch gekennzeichnet, daß** Bestimmungen, ob ein Raildruck des Ventils einen Schwellwertdruck übersteigt und ob eine Nockenwelle mit einer Kurbelwelle synchronisiert ist, vorgenommen werden und wobei das zweite Polarisationsspannungssignal eine vorbestimmte Anzahl von Spannungssignalen enthält, wobei jedes Spannungssignal der vorbestimmten Anzahl für eine Polarisationsansteuerdauer angelegt wird, wobei die Polarisationsansteuerdauer kleiner ist als eine Kraftstoffeinspritzansteuerdauer, wobei die vorbestimmte Anzahl von Spannungssignalen mit einer vorbestimmten Wiederholgeschwindigkeit angelegt wird.

10. Vorrichtung zum Laden eines piezoelektrischen Elements (10, 20, 30, 40, 50 und/oder 60), **dadurch gekennzeichnet, daß** die Vorrichtung Mittel umfaßt zum Ausführen eines Prozesses der anfänglichen Polarisation des piezoelektrischen Elements, der beinhaltet, ein Polarisationsspannungssignal je nach einer Temperatur des piezoelektrischen Elements (10, 20, 30, 40, 50 und/oder 60) an das piezoelektrische Element (10, 20, 30, 40, 50 und/oder 60) anzulegen.

11. Vorrichtung nach Anspruch 10, **dadurch gekennzeichnet, daß** die Vorrichtung aus Hardware und/oder Software besteht, um das Verfahren nach einem der Ansprüche 1 bis 9 zu implementieren.

12. Vorrichtung nach Anspruch 10 oder 11, **dadurch gekennzeichnet, daß** die Vorrichtung folgendes umfaßt:
Mittel zum Bestimmen, ob die Temperatur des piezoelektrischen Elements (10, 20, 30, 40, 50 und/oder 60) eine kritische Temperatur übersteigt; Mittel zum Ausführen eines ersten Polarisationsprozesses an dem piezoelektrischen Element (10, 20, 30, 40, 50 und/oder 60), wenn die Temperatur des piezoelektrischen Elements (10, 20, 30, 40, 50 und/oder 60) eine kritische Temperatur übersteigt, wobei der erste Polarisationsprozeß das Anlegen eines ersten Polarisationsspannungssignals an das piezoelektrische Element (10, 20, 30, 40, 50 und/oder 60) beinhaltet; und
Mittel zum Ausführen eines zweiten Polarisationsprozesses an dem piezoelektrischen Element (10, 20, 30, 40, 50 und/oder 60), wenn die Temperatur des piezoelektrischen Elements (10, 20, 30, 40, 50 und/oder 60) unter der kritischen Temperatur liegt, wobei der zweite Polarisationsprozeß das Anlegen eines zweiten Polarisationsspannungssignals an das piezoelektrische Element (10, 20, 30, 40, 50 und/oder 60) beinhaltet.

13. Vorrichtung nach den Ansprüchen 10, 11 oder 12, **dadurch gekennzeichnet, daß** das piezoelektrische Element (10, 20, 30, 40, 50 und/oder 60) Teil eines Aktuators in einem Kraftstoffeinspritzsystem ist, wobei das Kraftstoffeinspritzsystem ein mit einer Verbrennungskammer verbundenes Ventil enthält, wobei der Aktuator dafür ausgelegt ist, sich zu bewegen und das Ventil zu schließen und zu öffnen, wobei das Ventil Kraftstoff mit einem Raildruck enthält und mit mindestens einem Drucksteuerventil verbunden ist.

14. Vorrichtung nach den Ansprüchen 12 oder 13, **dadurch gekennzeichnet, daß** der erste Polarisationsprozeß von dem zweiten Polarisationsprozeß differiert.

15. Vorrichtung nach den Ansprüchen 12, 13 oder 14, **dadurch gekennzeichnet, daß** das an das piezoelektrische Element (10, 20, 30, 40, 50 und/oder 60) angelegte erste Polarisationsspannungssignal eine vorbestimmte Anzahl von Spannungssignalen enthält, wobei jedes Spannungssignal der vorbestimmten Anzahl für eine Polarisationsansteuerdauer angelegt wird, wobei die vorbestimmte Anzahl von Spannungssignalen mit einer vorbestimmten Wiederholgeschwindigkeit angelegt wird.

16. Vorrichtung nach den Ansprüchen 12, 13, 14 oder 15, **dadurch gekennzeichnet, daß** der zweite Polarisationsprozeß beinhaltet, sicherzustellen, daß der Raildruck unter einem Schwellwertdruck bleibt.

17. Vorrichtung nach den Ansprüchen 12, 13, 14, 15 oder 16, **dadurch gekennzeichnet, daß** der zweite Polarisationsprozeß das Öffnen mindestens eines Drucksteuerventils beinhaltet.

18. Vorrichtung nach den Ansprüchen 12, 13, 14, 15, 16 oder 17, **dadurch gekennzeichnet, daß** das an das piezoelektrische Element (10, 20, 30, 40, 50 und/oder 60) angelegte zweite Polarisationsspannungssignal eine vorbestimmte Anzahl von Spannungssignalen enthält, wobei jedes Spannungssignal der vorbestimmten Anzahl für eine Polarisationsansteuerdauer angelegt wird, wobei die vorbestimmte Anzahl von Spannungssignalen mit einer vorbestimmten Wiederholgeschwindigkeit angelegt wird.

19. Vorrichtung nach den Ansprüchen 12, 13, 14, 15, 16, 17 oder 18, **dadurch gekennzeichnet, daß** der zweite Polarisationsprozeß das Bestimmen beinhaltet, ob der Raildruck einen Schwellwertdruck übersteigt, und das zweite Polarisationsspannungssignal eine vorbestimmte Anzahl von Spannungssignalen enthält, wobei jedes Spannungssignal der vorbestimmten Anzahl für eine Polarisationsansteuerdauer angelegt wird, wobei die Polarisationsansteuerdauer kleiner ist als eine Kraftstoffeinspritzansteuerdauer, wobei die vorbestimmte Anzahl von Spannungssignalen mit einer vorbestimmten Wiederholgeschwindigkeit angelegt wird.

20. Vorrichtung nach den Ansprüchen 12, 13, 14, 15, 16, 17, 18 oder 19, **dadurch gekennzeichnet, daß** der zweite Polarisationsprozeß das Bestimmen beinhaltet, ob der Raildruck einen Schwellwertdruck übersteigt und ob eine Nockenwelle mit einer Kurbelwelle synchronisiert ist, und das zweite Polarisationsspannungssignal eine vorbestimmte Anzahl von Spannungssignalen enthält, wobei jedes Spannungssignal der vorbestimmten Anzahl für eine Polarisationsansteuerdauer angelegt wird, wobei die Polarisationsansteuerdauer kleiner ist als eine Kraftstoffeinspritzansteuerdauer, wobei die vorbestimmte Anzahl von Spannungssignalen mit einer vorbestimmten Wiederholgeschwindigkeit angelegt wird.

## Revendications

1. °) Procédé pour charger un élément piézoélectrique (10, 20, 30, 40, 50 et/ou 60), dans lequel l'élément piézoélectrique (10, 20, 30, 40, 50 et/ou 60) est initialement polarisé par l'application d'un signal de tension de polarisation avant une action d'injection de carburant,
**caractérisé en ce que**
la polarisation initiale est effectuée en fonction d'une température de l'élément piézoélectrique (10, 20, 30, 40, 50 et/ou 60).

2. Procédé selon la revendication 1,
**caractérisé en ce que**
l'élément piézoélectrique (10, 20, 30, 40, 50 et/ou 60) fait partie d'un actionneur de soupape (7000) d'un système d'injection de carburant, la soupape étant connectée à une chambre de combustion, et l'actionneur étant adapté pour fermer et ouvrir la soupape en se déplaçant.

3. Procédé selon l'une quelconque des revendications précédentes,
**caractérisé en ce que**
les étapes suivantes sont exécutées :
- on détermine si la température de l'élément piézoélectrique (10, 20, 30, 40, 50 et/ou 60) dépasse la température critique ;
- on exécute une première opération de polarisation sur l'élément piézoélectrique (10, 20, 30, 40, 50 et/ou 60) si la température de l'élément piézoélectrique (10, 20, 30, 40, 50 et/ou 60) dépasse la température critique, la première opération de polarisation comprenant l'application d'un premier signal de tension de polarisation à l'élément piézoélectrique (10, 20, 30, 40, 50 et/ou 60) ; et
- on exécute une deuxième opération de polarisation sur l'élément piézoélectrique (10, 20, 30, 40, 50 et/ou 60) si la température de l'élément piézoélectrique est inférieure à la température critique, la deuxième opération de polarisation comprenant l'application d'un deuxième signal de tension de polarisation à l'élément piézoélectrique (10, 20, 30, 40, 50 et/ou 60).

4. Procédé selon l'une quelconque des revendications précédentes,
**caractérisé en ce que**
la tension de polarisation et/ou le premier signal de tension de polarisation comprend un nombre prédéterminé de signaux de tension, chaque signal de tension du nombre prédéterminé étant appliqué pendant une durée de commande de polarisation, le nombre prédéterminé de signaux de tension étant appliqué à une fréquence de répétition prédéterminée.

5. Procédé selon la revendication 3 ou 4,
**caractérisé en ce que**
la deuxième opération de polarisation comprend le fait de s'assurer qu'une pression de rampe de soupape reste en dessous d'une pression de seuil.

6. Procédé selon la revendication 3, 4 ou 5,
**caractérisé en ce que**
la deuxième opération de polarisation comprend l'ouverture d'au moins une soupape de commande de pression, la soupape de commande de pression étant connectée à la soupape.

7. Procédé selon la revendication 3, 4, 5 ou 6,
**caractérisé en ce que**
le deuxième signal de polarisation comprend un nombre prédéterminé de signaux de tension, chaque signal de tension du nombre prédéterminé étant appliqué pendant une durée de commande de polarisation, le nombre prédéterminé de signaux de tension étant appliqué à une fréquence de répétition prédéterminée.

8. Procédé selon la revendication 3, 4, 5, 6 ou 7,
**caractérisé en ce que**
l'étape consistant à déterminer si une pression de rampe de soupape dépasse une pression de seuil est exécutée, et le deuxième signal de tension de polarisation comprend un nombre prédéterminé de signaux de tension, chaque signal de tension du nombre prédéterminé étant appliqué pendant une durée de commande de polarisation, la durée de commande de polarisation étant plus courte qu'une durée de commande d'injection de carburant, le nombre prédéterminé de signaux de tension étant appliqué à une fréquence de répétition prédéterminée.

9. Procédé selon la revendication 3, 4, 5, 6, 7 ou 8,
**caractérisé en ce qu'**
on effectue les étapes consistant à déterminer si une pression de rampe de soupape dépasse une pression de seuil, et si un arbre à cames est synchronisé avec un vilebrequin, et le deuxième signal de tension de polarisation comprend un nombre prédéterminé de signaux de tension, chaque signal de tension du nombre prédéterminé étant appliqué pendant une durée de commande de polarisation, la durée de commande de polarisation étant plus courte qu'une durée de commande d'injection de combustible, le nombre prédéterminé de signaux de tension étant appliqué à une fréquence de répétition prédéterminée.

10. Appareil pour charger un élément piézoélectrique (10, 20, 30, 40, 50 et/ou 60),
**caractérisé en ce que**
l'appareil comprend un moyen pour exécuter un procédé de polarisation initiale de l'élément piézoélectrique qui comprend l'application d'un signal de tension de polarisation à l'élément piézoélectrique (10, 20, 30, 40, 50 et/ou 60) en fonction d'une température de l'élément piézoélectrique (10, 20, 30, 40, 50 et/ou 60).

11. Appareil selon la revendication 10,
**caractérisé en ce que**
l'appareil est constitué d'un équipement et/ou d'un logiciel pour mettre en oeuvre le procédé selon l'une quelconque des revendications 1 à 9.

12. Appareil selon la revendication 10 ou 11,
**caractérisé en ce que**
l'appareil comprend :
- un moyen pour déterminer si la température de l'élément piézoélectrique (10, 20, 30, 40, 50 et/ou 60) dépasse une température critique ;
- un moyen pour exécuter une première opération de polarisation sur l'élément piézoélectrique (10, 20, 30, 40, 50 et/ou 60) si la température de l'élément piézoélectrique (10, 20, 30, 40, 50 et/ou 60) dépasse une température critique, la première opération de polarisation comprenant l'application d'un premier signal de tension de polarisation à l'élément piézoélectrique (10, 20, 30, 40, 50 et/ou 60) ; et
- un moyen pour exécuter une deuxième opération de polarisation sur l'élément piézoélectrique (10, 20, 30, 40, 50 et/ou 60) si la température de l'élément piézoélectrique (10, 20, 30, 40, 50 et/ou 60) est inférieure à la température critique, la deuxième opération de polarisation comprenant l'application d'un deuxième signal de tension de polarisation à l'élément piézoélectrique (10, 20, 30, 40, 50 et/ou 60).

13. Appareil selon la revendication 10, 11 ou 12,
**caractérisé en ce que**
l'élément piézoélectrique (10, 20, 30, 40, 50 et/ou 60) fait partie d'un actionneur dans un système d'injection de carburant, le système d'injection de carburant comprenant une soupape connectée à une chambre de combustion, l'actionneur étant adapté pour fermer et ouvrir la soupape en se déplaçant, la soupape contenant du carburant à une certaine pression de rampe et étant connectée à au moins une soupape de commande de pression.

14. Appareil selon la revendication 12 ou 13,
**caractérisé en ce que**
la première opération de polarisation diffère de la deuxième opération de polarisation.

15. Appareil selon la revendication 12, 13 ou 14,
**caractérisé en ce que**
le premier signal de tension de polarisation appliqué à l'élément piézoélectrique (10, 20, 30, 40, 50 et/ou 60) comprend un nombre prédéterminé de signaux de tension, chaque signal de tension du nombre prédéterminé étant appliqué pendant une durée de commande de polarisation, le nombre prédéterminé de signaux de tension étant appliqué à une fréquence de répétition prédéterminée.

16. Appareil selon la revendication 12, 13, 14 ou 15,
**caractérisé en ce que**
la deuxième opération de polarisation comprend le fait de s'assurer que la pression de rampe reste en dessous d'une pression de seuil.

17. Appareil selon la revendication 12, 13, 14, 15 ou 16,
**caractérisé en ce que** la deuxième opération de polarisation comprend l'ouverture de l'au
moins une soupape de commande de pression.

18. Appareil selon la revendication 12, 13, 14, 15, 16 ou 17,
**caractérisé en ce que**
le deuxième signal de tension de polarisation appliqué à l'élément piézoélectrique (10, 20, 30, 40, 50 et/ou 60) comprend un nombre prédéterminé de signaux de tension, chaque signal de tension du nombre prédéterminé étant appliqué pendant une durée de commande de polarisation, le nombre prédéterminé de signaux de tension étant appliqué à une fréquence de répétition prédéterminée.

19. Appareil selon la revendication 12, 13, 14, 15, 16, 17 ou 18,
**caractérisé en ce que**
la deuxième opération de polarisation comprend l'étape consistant à déterminer si la pression de rampe dépasse une pression de seuil, et le deuxième signal de tension de polarisation comprend un nombre prédéterminé de signaux de tension, chaque signal de tension du nombre prédéterminé étant appliqué pendant une durée de commande de polarisation, la durée de commande de polarisation étant plus courte que la durée de commande d'injection de carburant, le nombre prédéterminé de signaux de tension étant appliqué à une fréquence de répétition prédéterminée.

20. Appareil selon la revendication 12, 13, 14, 15, 16, 17, 18 ou 19,
**caractérisé en ce que**
la deuxième opération de polarisation comprend les étapes consistant à déterminer si la pression de rampe dépasse une pression de seuil, et si un arbre à cames est synchronisé avec un vilebrequin, et le deuxième signal de tension de polarisation comprend un nombre prédéterminé de signaux de tension, chaque signal de tension du nombre prédéterminé étant appliqué pendant une durée de commande de polarisation, la durée de commande de polarisation étant plus courte qu'une durée de commande d'injection de carburant, le nombre prédéterminé de signaux de tension étant appliqué à une fréquence de répétition prédéterminée.
